(19) Europäisches Patentamt European Patent Office Office européen des brevets

(11) **EP 3 256 863 B1**

(12) **EUROPÄISCHE PATENTSCHRIFT**

(45) Veröffentlichungstag und Bekanntmachung des Hinweises auf die Patenterteilung:
**06.01.2021  Patentblatt 2021/01**

(21) Anmeldenummer: **16710670.7**

(22) Anmeldetag: **18.01.2016**

(51) Int Cl.:
*G01Q 60/30* (2010.01)    *G01Q 60/42* (2010.01)

(86) Internationale Anmeldenummer:
**PCT/DE2016/000021**

(87) Internationale Veröffentlichungsnummer:
**WO 2016/127969 (18.08.2016 Gazette 2016/33)**

(54) **VERFAHREN ZUR MESSUNG LOKALER ELEKTRISCHER POTENTIALFELDER MITTELS EINES RASTERSONDENMIKROSKOPS**

METHOD OF MEASURING LOCAL ELECTRICAL FIELDS USING A SCANNING PROBE MICROSCOPE

MÉTHODE DE MESURE DES CHAMPS ÉLÉCTRIQUES LOCALES AVEC UN MICROSCOPE À BALAYAGE DE SONDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.02.2015   DE 102015001713**

(43) Veröffentlichungstag der Anmeldung:
**20.12.2017   Patentblatt 2017/51**

(73) Patentinhaber: **Forschungszentrum Jülich GmbH 52425 Jülich (DE)**

(72) Erfinder:
- **TAUTZ, Frank, Stefan**
  **52066 Aachen (DE)**
- **TEMIROV, Ruslan**
  **50999 Köln (DE)**
- **WAGNER, Christian**
  **52351 Düren (DE)**
- **GREEN, Matthew, Felix, Blishen**
  **10629 Berlin (DE)**

(56) Entgegenhaltungen:
KR-B1- 100 696 870     US-A1- 2003 001 091
US-B1- 8 726 411

- **FLORIAN PUMP ET AL: "Quantum transport through STM-lifted single PTCDA molecules", APPLIED PHYSICS A; MATERIALS SCIENCE & PROCESSING, SPRINGER, BERLIN, DE, Bd. 93, Nr. 2, 15. August 2008 (2008-08-15), Seiten 335-343, XP019626930, ISSN: 1432-0630**
- **ZWILLER V ET AL: "Growth of single quantum dots on preprocessed structures: Single photon emitters on a tip", APPLIED PHYSICS LETTERS, A I P PUBLISHING LLC, US, Bd. 86, Nr. 9, 25. Februar 2005 (2005-02-25), Seiten 91911-091911, XP012066519, ISSN: 0003-6951, DOI: 10.1063/1.1869544**
- **DENG Z T ET AL: "Selective analysis of molecular states by functionalized scanning tunneling microscopy tips", PHYSICAL REVIEW LETTERS, AMERICAN PHYSICAL SOCIETY, US, Bd. 96, Nr. 15, 21. April 2006 (2006-04-21), Seiten 156102/1-156102/4, XP002513429, ISSN: 0031-9007, DOI: 10.1103/PHYSREVLETT.96.156102**
- **CHRISTIAN WAGNER ET AL: "Scanning Quantum Dot Microscopy", PHYSICAL REVIEW LETTERS, Bd. 115, Nr. 2, 1. Juli 2015 (2015-07-01), XP055272856, US ISSN: 0031-9007, DOI: 10.1103/PhysRevLett.115.026101**

**Beschreibung**

Die Erfindung betrifft ein Verfahren zur Messung lokaler elektrischer Potentialfelder mit Nanometerauflösung.

Die Schrift KR 100 696 870 B1 offenbart ein Rastersondenmikroskop das an dessen Spitze ein Quantenpunkt angebracht ist.

Die Veröffentlichung von Florian Pump et. al. "Quantum transport throuh STM-lifted single PTCDA molecules" in Applied Physics A; Materials Science & Processing, Springer, Berlin DE Bd. 93, Nr.2, 15 August (2008-08-15) offenbart auf den Seiten 335-343 ein Rastersondenmikroskop an dessen Spitze ein PCTDA Molekül angebracht ist.

Auch die Veröffentlichungen von Ziller V. et.al. "Growth of single quantum dots on preprocessed structures: Signle photon emitters on a tip "in Applied Physics Letters AIP Publishing LLC, US, Bd. 86, Nr. 9 vom 25. Februar 2005 auf den Seiten 91911-091911, XP012066519, ISSN: 0003-6951, DOI 10.1063/1.1869544, die Schrift US 2003/0021091 A1, sowie die Veröffentlichung von Deng Z. et.al. "Selective analysis of molecular states by functionalized scanning tunneling microscopy tips in Physical Review Letters, Americanm Physical Society, US, Bd. 96, NR 15, 21 vom 21. April 2006, Seiten 156102/1- 156102/4, XP002513429, ISSN: 0031-9007, DOI: 10.1103 / PHYSREVLETT. 96.156102 offenbaren Rastersondenmikroskope bei denen an der Spitze ein Quantenpunkt angebracht ist.

Die Schrift US 8 726 411 B1 offenbart ein Rastersondenmikroskop bei dem Nanopartikel als Quantenpunkt auf der Spitze eines Rastersondenmikroskops angebracht sind.

Nach dem Stand der Technik erfolgt die Messung elektrischer Potentiale bzw. elektrischer Felder mit Nanometerauflösung mit Rastersondenmikroskopen entweder über die sogenannte lokale Kontaktpotentialdifferenzmessung (Kelvin Probe Force Microscopy, KPFM) oder über die direkte Messung der Kräfte zwischen Ladungen in einer Probe und den in der metallischen Spitze durch Influenz induzierten Bildladungen (Electrostatic Force Microscopy, EFM). (S. Sadewasser, T. Glatzel, eds. Kelvin Probe Force Microscopy. Springer Verlag Berlin Heidelberg 2012. J. Colchero, A. Gil, und A.M. Baró, "Resolution enhancement and improved data interpretation in electrostatic force microscopy", Physical Rev. B 64, 245403 (2001).)

Mit den Verfahren nach dem Stand der Technik sind jedoch Nachteile verbunden. Im EFM werden auch Kräfte gemessen, die auf weiter entfernt liegende Teile der Spitze des Rasterkraftmikroskops wirken, da elektrische Felder langreichweitig sind, während im KPFM die gemessene Kontaktpotentialdifferenz von auch weiter entfernt liegenden Teilen der Spitze des Rastersondenmikroskops beeinflusst wird. Damit begrenzt die Größe der Metallspitze, insbesondere der Spitzenradius, der nicht wesentlich unter 30 nm liegen kann, die erreichbare laterale Auflösung der jeweiligen Messung. Diese Begrenzung ist sowohl für die Kelvin Probe Force Microscopy, KPFM, als auch für die Electrostatic Force Microscopy, EFM gegeben. Bei der EFM ist nachteilig, dass nur Kräfte gemessen werden können, jedoch keine elektrischen Felder und keine Potentialdifferenzen, und damit die Bestimmung des elektrischen Feldes schwierig ist, da keine gesicherten unabhängigen Informationen über die in der Spitze influenzierte Ladungen messbar sind. Bei der KPFM ist nachteilig, dass die Auflösung der Messung vom Abstand der Spitze von der zu untersuchenden Probe sowie vom Spitzenradius abhängig ist. Deswegen können mit KPFM auch nur zweidimensionale Karten der Kontaktpotentialdifferenz über einer Probenoberfläche gemessen werden, die sich nicht problemlos in die dritte Dimension senkrecht zur Probenoberfläche erweitern lassen.

Weiterhin ist die Kraft, die mit dem Rasterkraftmikroskop gemessen wird, unspezifisch, so dass in EFM neben den elektrischen Kräften, die quantitativ erfasst werden sollen, auch alle anderen wirkenden Kräfte, wie beispielsweise van der Waals Kräfte, erfasst werden. Gemessen wird dann die Gesamtkraft. Die Extraktion bzw. Ermittlung der elektrischen Kraft erfordert daher aufwändige Analyseverfahren, falls diese überhaupt möglich sind. Dieser Nachteil wirkt besonders dann schwer, wenn das lokale elektrische Potentialfeld um Nanostrukturen herum gemessen werden soll und wenn andere Kräfte, wie die van der Waals Kraft, eine wesentliche geringere laterale Abhängigkeit von der lateralen Position zeigen, aber unter Umständen viel stärker sind als die elektrische Kraft. Dann muss das gesuchte Signal als eine kleine Modulation auf einem großen Signal bestimmt werden, was messtechnische Probleme aufwirft.

Es ist die Aufgabe der Erfindung, die Nachteile des Standes der Technik zu überwinden. Insbesondere soll verhindert werden, dass die Messung von Teilen der Spitze beeinflusst wird, die weiter von deren spitzen Ende entfernt sind, beispielsweise abgerundete breitere Bereiche der Spitze, da eine Spitze in der Praxis nicht ideal spitz bzw. kegelförmig ist. Die räumliche Auflösung der Messung soll erhöht werden. Insbesondere soll die Auflösung der Messung unabhängig vom Spitzenradius und von dem Abstand der Spitze zur zu untersuchenden Probe sein. Insbesondere sollen auch dreidimensionale Karten des Potentialfelds gemessen werden können. Ferner sollen, im Unterschied zu EFM, elektrische Potentialfelder statt elektrischer Kräfte gemessen werden. Mit dem erfindungsgemäßen Rastersondenmikroskop und dem erfindungsgemäßen Verfahren soll insbesondere eine ausschließliche Messung elektrischer Potentialfelder ermöglicht werden. Die messtechnische Erfassung von anderen Kraft-oder Potentialfeldern, wie beispielsweise der van der Waals Wechselwirkung, soll unterbunden werden, so dass ausschließlich elektrische Potentialfelder von der rastersondenmikroskopischen Messung erfasst werden.

Ausgehend vom Oberbegriff des Anspruchs 1 und des nebengeordneten Anspruchs wird die Aufgabe erfindungsgemäß gelöst mit den im kennzeichnenden Teil dieser Ansprüche angegebenen Merkmalen.

Mit dem erfindungsgemäßen Verfahren ist es nunmehr möglich, elektrische Potentialfelder zu messen und eine höhere räumliche Auflösung der Messung von elektrischen Potentialfeldern zu ermöglichen. Weiter von dem Endpunkt der Spitze entfernte Teile der Spitze beeinflussen die Messung nicht mehr, so dass die Auflösung besser wird, als nach den Verfahren nach dem Stand der Technik. Die Auflösung des erfindungsgemäßen Verfahrens kann unabhängig vom Abstand zur Probenoberfläche 0.5 nm erreichen. Das erfindungsgemäße Verfahren ermöglichen insbesondere die Messung von dreidimensionalen Karten des Potentialfeldes.

Das erfindungsgemäße Verfahren ermöglicht insbesondere die ausschließliche Erfassung des elektrischen Potentialfelds bei der Messung, so dass fremde Störeinflüsse, wie beispielsweise die van der Waals Wechselwirkung, ausgeschaltet werden und die Messergebnisse nicht verfälschen.

Vorteilhafte Weiterbildungen der Erfindung sind in den Unteransprüchen angegeben.

Im Folgenden soll die Erfindung in ihrer allgemeinen Form dargestellt werden, die nicht einschränkend auszulegen ist.

Die Figuren zeigen Einzelheiten der Erfindung in schematischer Form. Es zeigen:

Fig. 1a, 1b: Schematische Darstellungen der Spitze eines Rastersondenmikroskops in zwei möglichen Ausführungen.
Fig. 2a, 2b, 2c, 2d, 2e: Eine Verdeutlichung der Funktionsweise der modifizierten Spitze eines Rastersondenmikroskops durch Vergleich mit einer elektrischen Schaltung.
Fig. 3a, 3b, 3c: Eine Verdeutlichung des Prinzips der erfindungsgemäßen elektrischen Potentialfeldmessung.
Fig. 4a: Einen beispielhaften Verlauf des elektrischen Potentialfelds oberhalb eines Moleküls.
Fig. 4b-4m: Messwerte oberhalb eines Moleküls, verglichen mit Simulationen in Figur 4n-4p.
Fig. 5: Messkurven zur Bestimmung der angelegten elektrischen Spannung, die zu einer Ladungsänderung des Quantenpunkts (entweder Aufnahme oder Abgabe eines Elektrons) führt.
Fig. 6: Den Verlauf des lokalen elektrischen Potentialfeldes einer elektrischen Punktladung, die sich auf einer Probenoberfläche befindet, mit und ohne Anwesenheit der geerdeten metallischen Spitze eines Rastersondenmikroskops, und den Verlauf des Abschirmfaktors S des lokalen elektrischen Potentialfelds durch die geerdete metallische Spitze.
Fig. 7: Den Verlauf der Gatingeffizienz G, den Verlauf des Abschirmfaktors S des lokalen elektrischen Potentialfelds und den Verlauf des Kehrwerts des Empfindlichkeitsfaktors R der Messung des lokalen elektrischen Potentialfelds.
Fig. 8: Ein Kalibrierlinienfeld für die Messung des lokalen elektrischen Potentials, für unterschiedliche Abstände zwischen Spitze und Probe.
Fig. 9: Eine Abbildung zur Kalibrierung der Messung des elektrischen Potentialfelds mittels einer theoretischen Rechnung.
Fig. 10: Gemessene Äquipotentiallinien des elektrischen Potentialfelds über einer Probe.

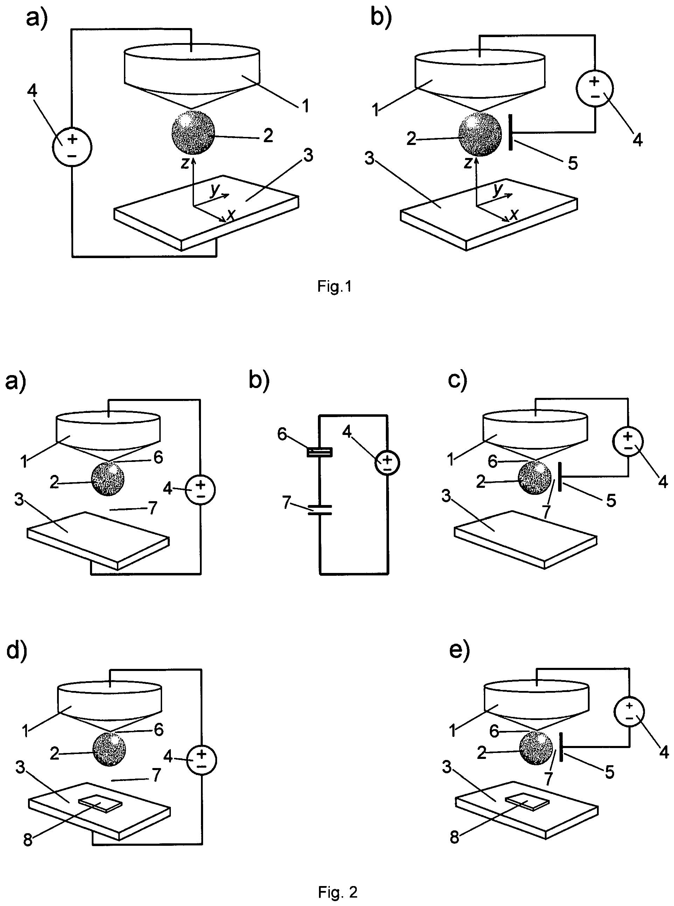

Figur 1a zeigt die Spitze 1 eines Rastersondenmikroskops, an der ein Quantenpunkt 2 befestigt ist. Unterhalb der Spitze 1 mit Quantenpunkt 2 befindet sich eine Probenoberfläche 3. Die Probenoberfläche 3 und die Spitze 1 sind über eine Spannungsquelle 4 miteinander verbunden.

Figur 1b zeigt eine Variante eines Rastersondenmikroskops, bestehend aus Spitze 1 und Quantenpunkt 2 oberhalb einer Probenoberfläche 3. Bei dieser Variante wird die Spannung der Spannungsquelle 4 zwischen Spitze 1 und einer weiteren Elektrode 5 angelegt, die an den Quantenpunkt 2 herangeführt ist.

In den Figuren 2a, 2b, 2c, 2d, 2e haben gleiche Vorrichtungsmerkmale dieselben Bezugszeichen. Teilfiguren a) und c) entsprechen den Teilfiguren a) und b) in Figur 1. In Figur 2b wird die Kombination aus Spitze 1, Quantenpunkt 2 und Probenoberfläche 3 in Form einer äquivalenten Schaltung dargestellt, die einen Kondensator 6 aufweist, durch den ein Tunnelstrom möglich ist und einen Kondensator 7, durch den ein Tunnelstrom entweder möglich oder unmöglich ist. Für die Funktion der erfindungsgemäßen Verfahren ist ein Tunnelstrom durch den Kondensator 7 weder nötig noch schädlich. Der Kondensator 6 entspricht in Figur 2a und in Figur 2c der Kombination aus der Spitze 1 und dem Quantenpunkt 2. Der Kondensator 7 entspricht in Figur 2a der Kombination aus der Probenoberfläche 3 und dem Quantenpunkt 2, während der Kondensator 7 in Figur 2c der Kombination aus Elektrode 5 und Quantenpunkt 2 entspricht. Die 4 bezeichnet eine Spannungsquelle. Figur 2d entspricht Figur 2a mit zusätzlicher Nanostruktur 8, deren lokales elektrisches Potentialfeld gemessen werden soll, auf der Probenoberfläche 3. Figur 2e entspricht Figur 2c mit zusätzlicher Nanostruktur 8, deren lokales elektrisches Potentialfeld gemessen werden soll, auf der Probenoberfläche 3.

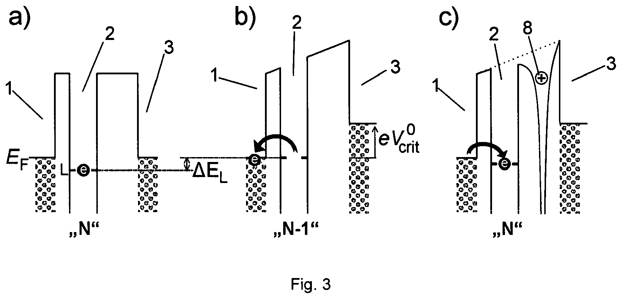

Figur 3a, 3b, 3c zeigen ein Energieschema von Spitze 1, Quantenpunkt 2, Probenoberfläche 3. Dabei wird eine Konfiguration der Vorrichtung wie in Figur 1a gezeigt zu Grunde gelegt, ohne dass dies eine Einschränkung des Funktionsprinzips bedeutet. Zusätzlich enthält Figur 3c eine Nanostruktur 8. Die Nanostruktur 8 wird hier vereinfachend durch eine einzelne elektrische Punktladung repräsentiert. In Figur 3a ist das Energieniveau L des Quantenpunkts 2 mit einem Elektron besetzt. Dieser Zustand des Quantenpunkts wird mit "N" bezeichnet. In Figur 3b wird eine elektrische Spannung $V_{crit}^0$ zwi-

schen Spitze 1 und Probenoberfläche 3 angelegt, so dass das Energieniveau L des Quantenpunkts 2 entladen wird (das in Figur 2a im Quantenpunkt 2 sich befindende Elektron transferiert in die Spitze 1). Dieser Zustand des Quantenpunkts wird mit "N-1" bezeichnet. In Figur 3c befindet sich zwischen Spitze 1 und Probenoberfläche 3 eine Nanostruktur 8, repräsentiert durch eine Punktladung. Diese modifiziert durch ihr lokales elektrisches Potentialfeld den Potentialverlauf zwischen Spitze 1 und Probenoberfläche 3, insbesondere am Ort des Quantenpunkts 2, so dass das Energieniveau L des Quantenpunkts 2 wieder geladen wird und der Quantenpunkt 2 damit zum Zustand "N" zurückkehrt, obwohl nach wie vor die gleiche elektrische Spannung $V_{crit}^0$ zwischen Spitze 1 und Probenoberfläche 3 anliegt.

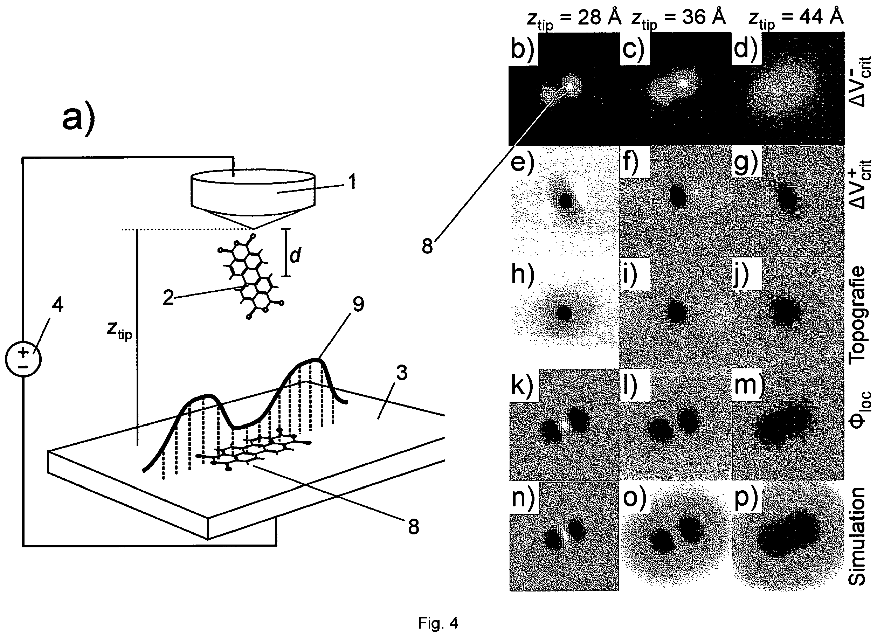

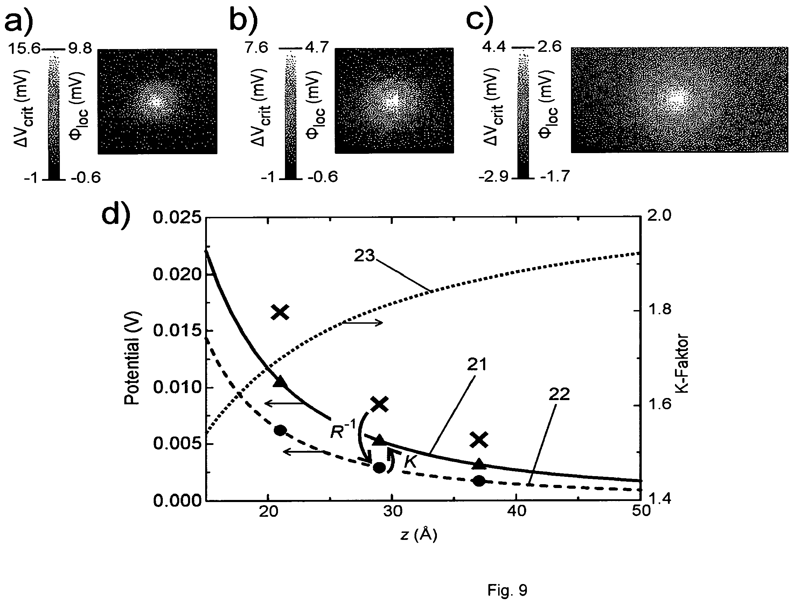

In Figur 4a ist der laterale Verlauf des elektrischen Potentials 9 über einer Nanostruktur 8, in diesem Falle einem PTCDA Molekül 8, schematisch dargestellt. Der Quantenpunkt 2 ist als PTCDA Molekül 2 realisiert. In Figuren 4b bis 4g sind Karten der Verschiebung $\Delta V_{crit}$ der kritischen Spannung oberhalb der Nanostruktur 8 bei drei verschiedenen Höhen $z_{tip}$ der Spitze 1 auf der Probenoberfläche 3 dargestellt. Dabei beziehen sich Figuren 4b, 4c und 4d auf negative kritische Spannungen $V_{crit}^{0,-}$, während sich Figuren 4e, 4f und 4g auf positive kritische Spannungen $V_{crit}^{0,+}$ beziehen. Figuren 4h bis 4m zeigen die Daten aus Figuren 4b bis 4g separiert nach dem Signal der Topographie (Figuren 4h, 4i und 4j) und dem elektrischen Potentialfeld (4k, 4l und 4m). Die Graustufen in Figuren 4h, 4i und 4j entsprechen den Werten der Topographie in Å. Die Graustufen in Figuren 4k, 4l und 4m entsprechen den Werten des elektrischen Potentials, kalibriert nach dem Verfahren in Figur 9. Die Karten in Figuren 4b bis 4g wurden mit dem Verfahren V1 in einer Messanordnung wie in Figur 1a/2d aufgenommen. Die Karten in Figuren 4n, 4o und 4p sind Simulationsrechnungen des lokalen elektrischen Potentials von PTCDA.

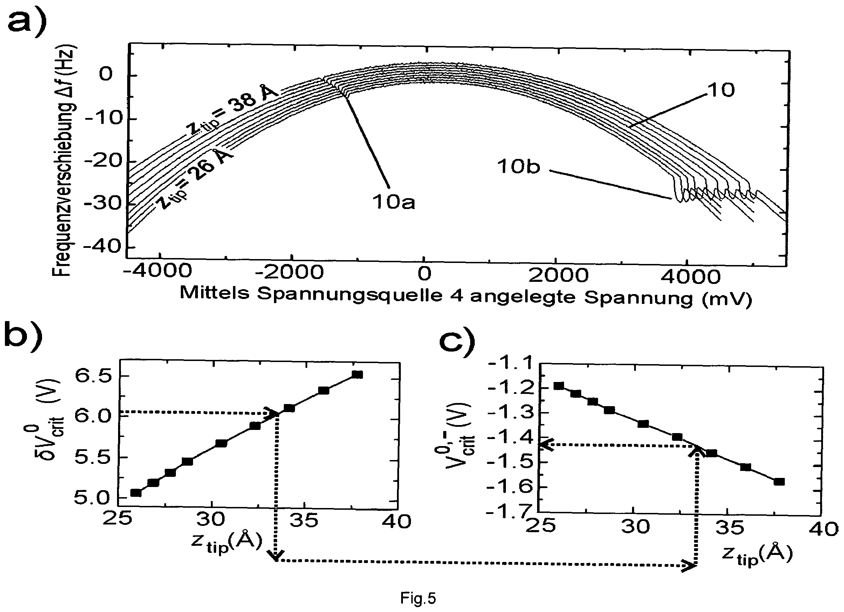

Figur 5a zeigt in der Abszisse die mittels Spannungsquelle 4 in Figur 1a angelegte Spannung (in mV) und in der Ordinate die Frequenzverschiebung eines frequenzmodulierten Rasterkraftmikroskops (in Hz). Die verschiedenen Kurven 10 wurden bei unterschiedlichen Abständen zwischen Spitze 1 und Probenoberfläche 3 aufgenommen. Peak 10a markiert eine Ladungsänderung des Quantenpunktes 2 bei negativer kritischer Spannung $V_{crit}^0$, die mit $V_{crit}^{0,-}$ bezeichnet wird. Peak 10b markiert eine Ladungsänderung des Quantenpunktes 2 bei positiver kritischer Spannung $V_{crit}^0$, die mit $V_{crit}^{0,+}$ bezeichnet wird. Figur 5b zeigt den Zusammenhang zwischen dem Abstand zwischen Spitze 1 und Probenoberfläche 3 und der Differenz $\delta V_{crit}^0 = V_{crit}^{0,+} - V_{crit}^{0,-}$ der positiven und negativen kritischen Spannungen. Figur 5c zeigt den Zusammenhang zwischen dem Abstand zwischen Spitze 1 und Probenoberfläche 3 und der negativen kritischen Spannung $V_{crit}^{0,-}$. Die gestrichelten Pfeile erklären das Separationsverfahren zwischen Topographie und elektrischem Potentialfeld nach Abschnitt (M7).

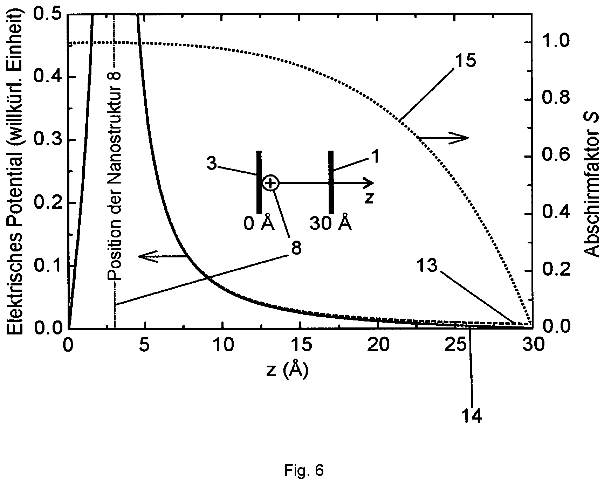

In Figur 6 ist der analytisch berechnete Verlauf des elektrischen Potentialfeldes (auf der Ordinate) einer Nanostruktur 8, hier repräsentiert durch eine Punktladung 8, im Abstand von 3 Å von der Probenoberfläche 3 dargestellt, und zwar entlang einer Geraden durch die Punktladung und senkrecht zur Probenoberfläche 3. Die z-Koordinate auf dieser Geraden ist auf der Abszisse aufgetragen. Der Punkt z=0 liegt in der Probenoberfläche 3. Kurve 13 bezieht sich auf den Fall, dass keine Spitze 1 und kein Quantenpunkt 2 vorhanden sind. Das elektrische Potential erreicht dann den Wert 0 für z=∞. Kurve 14 bezieht sich auf den Fall, dass sich bei z=30 Å die geerdete metallische Spitze 1 befindet. Die Spitze 1 wird als ebene, unendlich ausgedehnte Elektrode angenommen. Die geerdete Spitze 1 zieht das elektrische Potential bei z=30 Å auf den Wert 0. Dies reduziert den Wert des elektrischen Potentials bei allen Werten z auf der Geraden. Kurve 15 zeigt den Quotienten zwischen Kurven 14 und 13 und gibt damit den z-abhängigen Abschirmfaktor S an, mit dem die geerdete Spitze 1 das lokale elektrische Potentialfeld bei z abschirmt. S kann Werte zwischen 0 und 1 annehmen, wobei kleine Abschirmfaktoren eine große Abschirmung bedeuten. Abschirmfaktoren für elektrische Potentialfelder beliebiger Ladungsverteilungen der Nanostruktur 8 können durch Superposition der elektrischen Potentialfelder von Punktladungen berechnet werden.

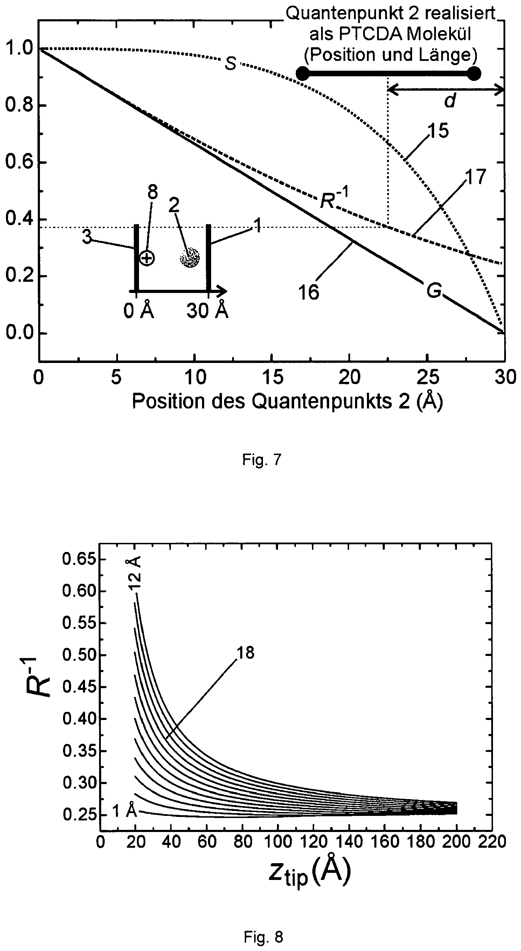

Figur 7 zeigt auf der Ordinate den Kehrwert des Empfindlichkeitsfaktors R (Kurve 17) für einen Quantenpunkt 2 als Funktion seiner Position zwischen Spitze 1 und Probenoberfläche 3, bei konstantem Abstand zwischen Spitze 1 und Probenoberfläche 3 von 30 Å. Der Empfindlichkeitsfaktor R ist definiert als Verhältnis zwischen der notwendigen Verschiebung $\Delta V_{crit}$ der kritischen Spannung, um das Energieniveau L des Quantenpunkts 2 am chemischen Potential der Spitze 1 zu halten, und der Änderung des lokalen elektrischen Potentials am Ort des Quantenpunkts 2. Für ein PTCDA Molekül als Quantenpunkt 2, das maßstäblich eingezeichnet ist, beträgt $R^{-1} \approx 0,38$, was $R \approx 2,5$ entspricht. Der Empfindlichkeitsfaktor $R$ ergibt sich als $R = S/G$, wobei G die Gatingeffizienz (Kurve 16) und S der Abschirmfaktor des lokalen Potentials (Kurve 15, aus Figur 6 übernommen) sind. Die Gatingeffizienz $G$ ist definiert als reziproker Quotient der zwischen Probenoberfläche 3 und Spitze 1 angelegten Spannung und der davon zwischen Quantenpunkt 2 und Spitze 1 abfallenden Spannung. In der Figur wurde die Spitze 1 als ebene, unendlich ausgedehnte Elektrode angenommen. Weiterhin wurde angenommen, dass die Kapazitäten der Kondensatoren 6 und 7 im Ersatzschaltbild Figur 2b mit dem effektiven Plattenabstand in gleicher Weise ansteigen. Unter diesen Annahmen verläuft G linear mit der Position des Quantenpunkts 2.

Figur 8 zeigt ein Kalibrierlinienfeld des reziproken Empfindlichkeitsfaktors $R^{-1}(z_{tip}, d)$ für die quantitative Bestimmung des lokalen elektrischen Potentialfelds $\phi_{loc}(\mathbf{r})$. $z_{tip}$ ist der Abstand zwischen Spitze 1 und Probenoberfläche 3, d ist der Abstand zwischen Quantenpunkt 2 und Spitze 1. Jede der Kurven 18 bezieht sich auf ein *d*. Die oberste Kurve wurde für einen Abstand *d* von 12 Å, die untere Kurve für einen Abstand *d* von 1 Å ermittelt. Für die dazwischen liegenden Kurven steigt d von unten nach oben von Kurve zu Kurve um jeweils 1 Å an. Direkte Messgröße des erfindungsgemäßen Verfahrens ist immer ein $\Delta V_{crit}(\mathbf{r})$, eines für jede Ladungsänderung des Quantenpunkts 2. Aufgrund des Zusammenhangs $\phi_{loc}(\mathbf{r})=R^{-1}(z_{tip},d)\Delta V_{crit}(\mathbf{r})$ lässt sich bei Kenntnis eines Kalibrierlinienfeldes das lokale Potential $\phi_{loc}(\mathbf{r})$ quantitativ bestimmen. Das Kalibrierlinienfeld wurde aus Abschirmfaktoren *S,* die wie in Figur 6 berechnet wurden, und Gatingeffizienzen *G,* die wie in Figur 7 berechnet wurden, nach $R(z_{tip},d)=S(z)/G(z_{tip,d})$ bestimmt, wobei $d=z_{tip}-z$ gilt.

Figur 9 zeigt eine Abbildung zur Kalibrierung der Messung des lokalen elektrischen Potentialfeldes mittels einer theoretischen Rechnung. Figuren 9a bis 9c zeigen gemessene Karten der Verschiebung der kritischen Spannung $\Delta V_{crit}^{gauge}$, gemessen in drei unterschiedlichen Abständen *z* zur Probenoberfläche 3 für ein Ag Adatom (=Nanostruktur 8) auf der Ag(111) Oberfläche (=Probenoberfläche 3), das zur Kalibrierung benutzt werden soll (Figur 9a: z=21 Å, Figur 9b: *z*=29 Å, Figur 9c: *z*=37 Å). Es gilt $z=z_{tip}-d$. Die jeweiligen Grauskalen von $\Delta V_{crit}^{gauge}$ in mV sind links neben den jeweiligen Skalenbalken angegeben. Figur 9d enthält als Kreuze die den Karten in Figuren 9a bis 9c senkrecht über dem Adatom entnommenen Werte von $\Delta V_{crit}^{gauge}$ bei *z*. Figur 9d enthält ferner als Kurve 21 das lokale elektrische Potential $\phi_{loc}^{gauge}$ an den gegebenen *z* senkrecht über dem Adatom, errechnet mittels Dichtefunktionaltheorie. Durch Anwendung des im Modell einer ebenen, unendlich ausgedehnten Spitze 1 errechneten Empfindlichkeitsfaktors *R* lässt sich nach $\phi_{loc}(\mathbf{r})=R^{-1}(z,d)\Delta V_{crit}^{gauge}(\mathbf{r})$ aus der Verschiebung der kritischen Spannung $\Delta V_{crit}^{gauge}(\mathbf{r})$ ein lokales elektrisches Potential $\phi_{loc}(\mathbf{r})$ bestimmen. Die so bestimmten Werte $\phi_{loc}$ senkrecht über dem Adatom sind als Kreise in Figur 9d eingezeichnet. Als Kurve 22 ist ein Fit mittels der Gleichung $(z-z_0)^{-2}$, dem erwarteten Verhalten des elektrischen Potentials des Dipolfeldes des Adatoms, das einen Smoluchowski Dipol auf der Metalloberfläche ausbildet, gezeigt. Der Unterschied zwischen Kurve 21 und den Kreisen geht auf Faktoren zurück, die in dem Empfindlichkeitsfaktor *R,* der nach dem Modell einer ebenen, unendlich ausgedehnten Spitze 1 errechnet wurde, nicht enthalten sind. Einer dieser Faktoren ist die Feldüberhöhung in der Nähe der in Realität gekrümmten Spitze 1, ein weiterer ist der unterschiedliche Anstieg der Kapazitäten der Kondensatoren 6 und 7 im Ersatzschaltbild Figur 2b als Funktion ihres Plattenabstands. Beide Faktoren können in einem Kalibrierfaktor *K(z)* zusammengefasst werden. Dieser Faktor *K(z)* ist in Figur 9d als Kurve 23 gezeigt. Mittels *K(z)* lässt sich für die Karten in Figuren 9a bis 9c eine absolute mV Skala des elektrischen Potentials, bezogen auf den Referenzpunkt, angeben: $\phi_{loc}^{gauge}(\mathbf{r})=R^{-1}(z,d)\,K(z)\,\Delta V_{crit}^{gauge}(\mathbf{r})$ wobei $R(z,d)$ der nach dem Modell einer ebenen, unendlich ausgedehnten Spitze 1 errechnete Empfindlichkeitsfaktor ist. Diese Skala ist rechts neben den Skalenbalken in Figuren 9a bis 9c angegeben. *K(z)* ist nur von der Geometrie des Systems aus Spitze 1 und Quantenpunkt 2 und in erster Näherung nicht von der Nanostruktur 8 abhängig, kann also auf beliebige Nanostrukturen 8, solange sie mit der gleichen Spitze gemessen werden, übertragen werden, um damit ein geeichtes lokales elektrisches Potential nach $\phi_{loc}(\mathbf{r})=R^{-1}(z,d)\,K(z)\,\Delta V_{crit}(\mathbf{r})$ zu berechnen, wobei $R(z,d)$ der nach dem Modell einer ebenen, unendlich ausgedehnten Spitze 1 errechnete Empfindlichkeitsfaktor ist. Auf diese Weise wurde die absolute Skala des elektrischen Potentialfelds in Figuren 4k, 4l, und 4m für das PTCDA Molekül als Nanostruktur 8 ermittelt.

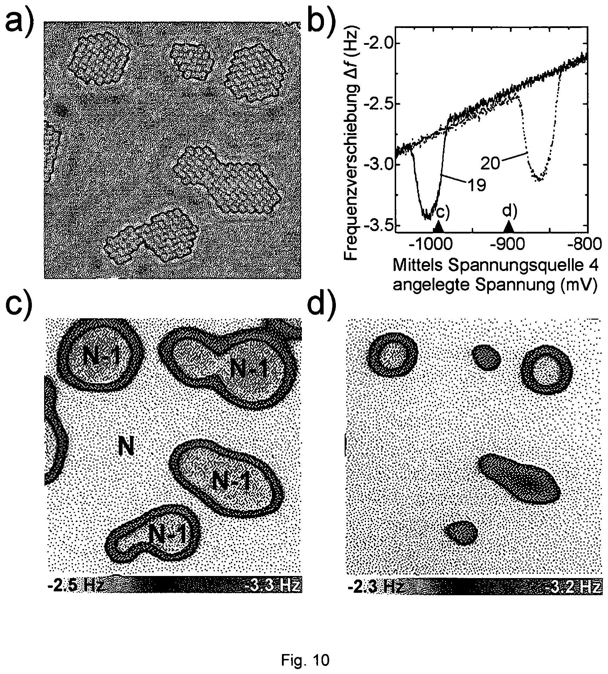

Figur 10a zeigt ein Rastertunnelmikroskopiebild einer Anzahl von PTCDA Inseln auf einer Ag(111) Oberfläche. Zwischen den Inseln ist die unbedeckte Ag(111) Oberfläche sichtbar. Figuren 10c und 10d zeigen dieselbe Probe und denselben Bildausschnitt wie Figur 10a. Figuren 10c und 10d wurden mit einem dynamischen Rasterkraftmikroskop mit handelsüblichen QPlus Sensor aufgenommen, an dessen Spitze sich ein PTCDA Molekül als Quantenpunkt 2 befindet. Die Grauskala in Figuren 10c und 10d zeigt die Frequenzverschiebung des QPlus Sensors. Das Aufnahmeverfahren für Figuren 10c und 10d ist das in (V2) beschriebene Verfahren. Figur 10b zeigt zwei Messkurven der Frequenzverschiebung als Funktion der mittels Spannungsquelle 4 angelegten Spannung. Kurve 19 wurde über der unbedeckten Ag(111) Oberfläche, Kurve 20 im Zentrum über einer PTCDA Insel aufgenommen. Die PTCDA Inseln können als Nanostruktur 8 aufgefasst werden, während die unbedeckte Ag(111) Oberfläche der Probenoberfläche 3 entspricht. Definitionsgemäß erfolgt die Ladungsänderung des Quantenpunkts 2 oberhalb der unbedeckten Ag(111) Oberfläche daher bei $V_{crit}^{0,-}$. $V_{crit}^{0,-}$ entspricht der Lage des Minimums der Kurve 19 auf der Abszisse in Figur 10b. Durch die Wahl der mittels Spannungsquelle 4 (Figur 1a) angelegten Spannung lässt sich das Potential der abzubildenden Äquipotentiallinien festlegen. In Figur 10c wurden -1000 mV als angelegte Spannung gewählt. Das Potential der Äquipotentiallinien in Figur 10c ist damit $\phi_{loc}=R^{-1}(V_{crit}^{0,-}+1000\ mV)$. In Figur 10d wurden -900 mV als angelegte Spannung gewählt. Das Potential der Äquipotentiallinien in Figur 10d ist $\phi_{loc}=R^{-1}(V_{crit}^{0,-}+900\ mV)$.

Ein Rastersondenmikroskop wird zur Verfügung gestellt, an dessen Spitze ein Quantenpunkt angebracht ist. Gegenstand der Erfindung ist daher ein Verfahren zur Messung von elektrischen Potentialfeldern mit einem Rastersondenmikroskop, an dessen Spitze ein Quentenpunkt positioniert bzw. angebracht ist.

In nem besonderen Beispiel kann das Rastersondenmikroskop auch ein Rasterkraftmikroskop sein, das eine spezielle Ausführungsform eines Rastersondenmikroskops darstellt. Der Begriff des Quantenpunktes ist dem Fachmann bekannt. Er ist als funktioneller Begriff zu verstehen. Es handelt sich um eine räumlich begrenzte Struktur, in der Elektronen diskrete Energiewerte annehmen.

Der Quantenpunkt kann durch alle Mittel verwirklicht werden, die diese Eigenschaft realisieren.

Diese Mittel können ein Stoff oder eine Vorrichtung sein.

Im Falle eines Stoffs können beispielhaft aber nicht beschränkend folgende Stoffe oder Stoffklassen genannt werden. Es kommen grundsätzlich organische, metallorganische oder anorganische Materialien in Betracht.

Als Stoffe kommen alle Moleküle oder räumlich begrenzte Anordnungen von Materie in Frage, die das Kriterium erfüllen, die Eigenschaft eines Quantenpunkts zu verwirklichen. Dabei kommt es darauf an, Elektronen in einem begrenzten Raumbereich zu lokalisieren.

Die räumlich begrenzten Anordnungen von Materie können atomar oder molekular geordnet oder ungeordnet sein.

Die räumlich begrenzten Anordnungen von Materie können Nanokristalle, geordnete oder ungeordnete Cluster, Nanoröhren, z.B. Kohlenstoffnanoröhren (CNT) oder lithographische Strukturen sein.

Die Nanokristalle können beispielsweise Metallcluster, insbesondere - aber nicht notwendigerweise - mit Hüllen aus organischen Liganden, Halbleiternanostrukturen mit oder ohne Dotierung, insbesondere Nanodrähte, sowie Nanokristalle oder Cluster von Molekülen sein. Die Moleküle können organische, bioorganische, anorganische oder metallorganische Moleküle, wie beispielsweise Metallkomplexe, Metallocene, aromatische Moleküle, kondensierte aromatische Moleküle oder aliphatische Moleküle und ihre Derivate, mit oder ohne Heteroatome, wie O, N, S, oder P, beispielsweise wie in Figur 4a gezeigt 3,4,9,10-Perylentetracarbonsäuredianhydrid (PTCDA), sein.

Ebenfalls mögliche Realisierungen eines Quantenpunktes sind Vorrichtungen, die Beschränkungen eines Elektronengases auf einen begrenzten Raumbereich in einem geeigneten Material ermöglichen. Diese Vorrichtungen können geeignete mikro- oder nanoskalige Elektroden enthalten, die mit ihren elektrischen Feldern die räumliche Beschränkung eines Elektronengases in einem geeigneten Material erzeugen. Geeignete Materialien, in denen mittels solcher Elektroden räumliche Beschränkungen eines Elektronengases erzeugt werden können, sind beispielsweise dotierte Halbleiter, Graphen, Silizen oder andere zweidimensionale Materialien bzw. Stoffe. Andere geeignete Vorrichtungen können lithographisch geeignet strukturierte Materialien sein. Geeignete lithographische Strukturen können auch direkt in die Spitze des Rastersondenmikroskops hinein strukturiert sein.

In besonders vorteilhaften Realisierungen ist der Kontakt zwischen der leitfähigen Spitze des Rastersondenmikroskops und dem Quantenpunkt mechanisch und chemisch stabil, so dass während des Rastervorgangs der Quantenpunkt an der Spitze unbeweglich verbleibt. In besonders vorteilhaften Realisierungen ist der Kontakt fernerhin so beschaffen, dass er eine Tunnelbarriere darstellt, so dass die elektronische Ankopplung des Quantenpunktes an das Elektronenreservoir der metallischen Spitze gering ist. Die Tunnelbarriere entspricht in Figur 2b funktionell dem Kondensator 6. Das hat zur Folge, dass der Quantenpunkt an der Spitze seine Eigenschaften als Quantenpunkt besonders gut beibehält. Konkret kann dies durch eine geeignete chemische Bindung zur Spitze oder durch eine dünne elektrisch isolierende Schicht zwischen Quantenpunkt und metallischer Spitze erreicht werden. Unter einer chemischen Bindung ist eine chemische Bindung zwischen der Spitze und dem Quantenpunkt zu verstehen. Die isolierende Schicht kann durch unterschiedliche Ausgestaltungen verwirklicht sein, beispielsweise Salze, Oxide oder andere Isolatoren. Im Falle des Vorliegens eines Moleküls oder Nanokristalls als Quantenpunkt kann auch ein Teil desselben die Funktion der isolierenden Schicht übernehmen. Das kann ein Heteroatom, wie z.B. O, S, N oder P, oder eine strukturelle Untereinheit des Quantenpunktes sein. Im Falle des PTCDA-Moleküls als Quantenpunkt (Figur 4a) wird der Isolator durch das Sauerstoffatom sowie seine chemische Bindung an die Spitze realisiert.

In besonders vorteilhaften Realisierungen ist die räumliche Ausdehnung des Quantenpunktes so klein, dass der Raumbereich, über den das elektrische Potentialfeld gemittelt wird, möglichst klein ist, gleichzeitig aber hinreichend groß, so dass die diskreten Energieniveaus des Quantenpunktes auf der Energieachse nicht zu weit voneinander entfernt sind, damit mindestens eines dieser Niveaus mit moderaten Spannungen (dem Betrag nach kleiner als einige 10 V) an das chemische Potential der Spitze verschoben werden kann. Der Raumbereich, über den das elektrische Potential gemittelt wird, entspricht der Größe des Quantenpunktes. In besonders vorteilhaften Realisierungen wird dies durch kompakte, vorzugsweise aromatische Moleküle erreicht, wodurch die Ausdehnung des Raumbereichs, über den gemittelt wird, Werte bis hinunter zu 0.5 nm erreichen kann.

Die Befestigung des Quantenpunktes an die Metallspitze kann durch chemische oder physikalische (z.B. Dispersionskräfte) Bindung erfolgen. Der Quantenpunkt kann entweder mit der Spitze des Rastersondenmikroskops von einer Unterlage aufgenommen oder direkt an der Spitze hergestellt werden. Hierzu stehen einerseits etablierte Manipulationsmethoden mittels Rastersondenverfahren, andererseits etablierte Methoden des epitaktischen Wachstums, der lithographischen Strukturierungsverfahren oder des katalytischen Wachstums von (Halbleiter-) Nanostrukturen zur Verfügung. Besonders vorteilhafte Realisierungen dieser Befestigung kombinieren mechanische und chemische Stabilität und elektrisch isolierende Eigenschaften und sind räumlich auf die Größe eines oder weniger Atome begrenzt.

Bei der Durchführung des erfindungsgemäßen Verfahrens wird die mit dem Quantenpunkt beaufschlagte Spitze des Rastersondenmikroskops über eine zu untersuchende Probe geführt. Dabei findet die Messung des elektrischen Potentialfeldes statt, indem an verschiedenen Punkten nacheinander das elektrische Potential gemessen wird. Die Messung des elektrischen Potentials an einem gegebenen Punkt wird im folgenden Abschnitt (P1 bis P6) über die physikalischen Wirkprinzipien genauer beschrieben.

(P1) Durch eine mittels Spannungsquelle 4 angelegte Spannung lassen sich die Energieniveaus des Quantenpunkts 2 relativ zum chemischen Potential der Spitze 1 verschieben, was als Gating bezeichnet wird. Damit kann die Besetzung des Quantenpunkts 2 mit Elektronen kontrolliert werden. Figur 1 zeigt zwei Möglichkeiten, wie die Spannung mittels Spannungsquelle 4 angelegt werden kann, entweder zwischen Spitze 1 und Probenoberfläche 3 (Figur 1a) oder zwischen Spitze 1 und einer Elektrode 5, die an den Quantenpunkt herangeführt wird. Ohne dass dies einschränkend sein soll, ist ein Mehrspitzen-Rastersondenmikroskop nach dem Stand der Technik eine mögliche Realisierung der Messanordnung in Figur 1b.

Eine der Spitzen des Mehrspitzen-Rastersondenmikroskops wird dabei als Spitze 1, eine andere als Elektrode 5 verwendet.

(P2) Insbesondere kann die mittels Spannungsquelle 4 angelegte Spannung so gewählt werden, dass eines der Energieniveaus des Quantenpunktes 2 (Energieniveau L) an das chemische Potential der Spitze 1 verschoben wird (Figur 3b). Dann kommt es zur Ladungsänderung des Quantenpunkts 2 (entweder Aufnahme oder Abgabe eines Elektrons; in Figur 3b ist die Abgabe eines Elektrons gezeigt, ohne dass dies einschränkend ist). Befindet sich der Quantenpunkt 2 an einem Punkt im Raum, an dem kein zu messendes elektrisches Potential vorliegt, dann ist die zur Ladungsänderung des Quantenpunkts 2 (entweder durch Aufnahme oder Abgabe eines Elektrons) notwendige mittels Spannungsquelle 4 angelegte Spannung $V_{\text{crit}}^0$. $V_{\text{crit}}^0$ kann positiv oder negativ sein. Ein positives $V_{\text{crit}}^0$ wird mit $V_{\text{crit}}^{0,+}$, ein negatives $V_{\text{crit}}^0$ wird mit $V_{\text{crit}}^{0,-}$ bezeichnet.

(P3) Wenn die Spitze 1 mit Quantenpunkt 2 an einen Punkt verfahren wird, an dem ein zu messendes lokales elektrisches Potential vorliegt, das z.B. durch eine bestimmte Ladungsverteilung einer Nanostruktur 8, die sich auf oder in der Probenoberfläche 3 befindet, erzeugt wird, wird das am Ort des Quantenpunkts 2 aufgrund der mittels Spannungsquelle 4 angelegten Spannung existente externe elektrische Potential mit dem auf die Nanostruktur 8 zurückgehenden zu messenden lokalen elektrischen Potential überlagert (Figur 3c). Dadurch wird die mittels Spannungsquelle 4 angelegte kritische Spannung, bei der das Energieniveau L des Quantenpunktes 2 ge- oder entladen wird, verändert. Der neue Wert $V_{\text{crit}}$ unterscheidet sich um $\Delta V_{\text{crit}}$ gegenüber $V_{\text{crit}}^0$, d.h. $V_{\text{crit}} = V_{\text{crit}}^0 + \Delta V_{\text{crit}}$. Der Quantenpunkt 2 erfüllt damit die Funktion eines selektiven Sensors für das zu messende lokale elektrische Potential. Aus der Spannungsänderung $\Delta V_{\text{crit}}$ lässt sich quantitativ auf das lokale elektrische Potential zurückrechnen, siehe Punkt (P6) in diesem Abschnitt der Beschreibung.

(P4) Entscheidend für die Messung des lokalen elektrischen Potentials mit Hilfe des Quantenpunkts 2 ist die Möglichkeit, genau zu bestimmen, bei welcher mittels Spannungsquelle 4 angelegten Spannung $V_{\text{crit}}$ bzw. $V_{\text{crit}}^0$ der Quantenpunkt 2 eine Ladungsänderung (entweder Aufnahme oder Abgabe eines Elektrons) erfährt. Dies kann z.B. durch eine Kraftmessung geschehen, ohne dass dies einschränkend ist. In dem Fall muss die Spitze 1 die Spitze eines Rasterkraftmikroskops sein. Andere Detektionsmethoden sind möglich.

(P5) Soll die Bestimmung des extern angelegten elektrischen Felds, bei dem der Quantenpunkt 2 eine Ladungsänderung (entweder Aufnahme oder Abgabe eines Elektrons) erfährt, mit Hilfe einer Kraftmessung erfolgen, so kann dies in folgendem Verfahren ausgeführt werden: Durch die Ladungsänderung des Quantenpunkts ändert sich die Ladungsverteilung nahe der Spitze des Rasterkraftmikroskops. Dadurch wird eine sprunghafte Änderung der Kraft, die auf die Spitze wirkt, bewirkt. Diese sprunghafte Änderung kann durch das Kraftmesssystem des Rasterkraftmikroskops gemessen werden (Figur 5a). Damit wird das zu messende Signal des lokalen elektrischen Potentials selektiv in eine messbare Kraft umgewandelt. Der Quantenpunkt 2 erfüllt damit die Funktion eines Signalwandlers, indem er das lokale elektrische Potential in ein Kraftsignal umwandelt, dass im Wesentlichen durch die Eigenschaften des Quantenpunktes 2, weniger durch das lokale elektrische Potential selbst, geprägt ist.

(P6) Die Veränderung $\Delta V_{\text{crit}}$ der mittels Spannungsquelle 4 angelegten Spannung $V_{\text{crit}}$, bei der der Quantenpunkt 2 eine Ladungsänderung (entweder Aufnahme oder Abgabe eines Elektrons) erfährt, erlaubt die quantitative Bestimmung des lokalen elektrischen Potentials $\phi_{\text{loc}}$. Das Verfahren zur Quantifizierung des lokalen elektrischen Potentials ist im Folgenden beschrieben:

Gegeben sei ein durch eine Nanostruktur 8 erzeugtes lokales elektrisches Potentialfeld $\phi_{\text{loc}}(\mathbf{r})$, das gemessen werden soll. Dazu wird die Spitze 1 mit Quantenpunkt 2 so positioniert, dass der Quantenpunkt 2 nacheinander an die Orte $\mathbf{r}$ gebracht wird. Bei jedem $\mathbf{r}$ wird nach Paragraph P3 ein $\Delta V_{\text{crit}}(\mathbf{r})$ bestimmt. Der Spannungsänderung $\Delta V_{\text{crit}}(\mathbf{r})$ entspricht eine Änderung $\Delta\phi_{\text{ext}}(\mathbf{r})$ des externen elektrischen Potentials am Ort $\mathbf{r}$. Da die Ladungsänderung des Quantenpunkts 2, bei der sich seine Gesamtelektronenzahl von $N$ nach $M$ ändert (wobei $|N-M| = 1$ gilt), für gegebenes $N$ und $M$ für alle Orte $\mathbf{r}$ beim gleichen elektrischen Summenpotential $\phi_{\text{loc}}(\mathbf{r})$ +

$\Delta\phi_{ext}(\mathbf{r})$ erfolgt, lässt sich aus $\Delta V_{crit}(\mathbf{r})$ grundsätzlich auf das lokale elektrische Potential $\phi_{loc}(\mathbf{r})$ an einem beliebigen Ort r, bezogen auf das lokale elektrische Potential $\phi_{loc}(\mathbf{r}_0)$ am Ort $\mathbf{r}_0$ der Referenzmessung, an dem die kritische Spannung den Wert $V_{crit}^0$ hat, schließen.

Für die tatsächliche Bestimmung von $\phi_{loc}(\mathbf{r})$ ist die Geometrie der Messanordnung, bestehend aus Spitze 1, Quantenpunkt 2 und Probenoberfläche 3, relevant, und zwar aus drei Gründen:

Erstens verändert die Gegenwart der metallischen, geerdeten Spitze 1 in der Nähe des Punktes **r,** an dem sich das zu messende elektrische Potential $\phi_{loc}(\mathbf{r})$ befindet, das tatsächliche elektrische Potential an diesem Ort **r** auf einen neuen Wert $\phi^*_{loc}(\mathbf{r})$. Der Grund ist folgender: Ohne Spitze 1 verschwindet in konventioneller Definition das elektrische Potential $\phi_{loc}(\mathbf{r})$ im Unendlichen. Mit Spitze 1 wird das Verschwinden des elektrischen Potentials an den Ort der Spitze 1 verlegt. Dies verzerrt die Äquipotentiallinien des lokalen elektrischen Potentialfeldes $\phi_{loc}(\mathbf{r})$, denn diese müssen in unmittelbarer Nähe zur metallischen Spitze 1 parallel zur Oberfläche der Spitze 1 verlaufen.

Diese Veränderung des lokalen elektrischen Potentials von $\phi_{loc}(\mathbf{r})$ zu $\phi^*_{loc}(\mathbf{r})$ stellt jedoch kein Problem dar, denn bei Kenntnis der Spitzengeometrie kann man diese Veränderung des lokalen elektrischen Potentials errechnen. Die Veränderung ist durch den ortsabhängigen Abschirmfaktor S(**r**) gegeben: $\phi^*_{loc}(\mathbf{r})$ = S(**r**) $\phi_{loc}(\mathbf{r})$. Eine beispielhafte Berechnung des Abschirmfaktors S(**r**) für eine Punktladung ist in Figur 6 gezeigt. Dabei wurde eine ebene, unendlich ausgedehnte Spitze 1 angenommen. Für eine solche ist die Abhängigkeit des Abschirmfaktors S von den lateralen Koordinaten *x* und *y* für nicht zu kleine z schwach, d.h. S(**r**)≈S(z). Dies gilt insbesondere immer dann, wenn die Äquipotentiallinien des lokalen Potentialfelds am Ort der Messung nur schwach gekrümmt sind und nahezu parallel zur Oberfläche der Spitze 1 verlaufen. Für andere Spitzengeometrien und Ladungsverteilungen der Nanostruktur 8 können Abschirmfaktoren S(r) mit Standardverfahren der Elektrostatik (Randwertprobleme) berechnet werden. Die Ladungsverteilung jeder Nanostruktur 8 kann dabei als Summe über Punktladungen dargestellt werden. Da das lokale elektrische Potential, das ja von einer Nanostruktur 8 herrührt, sich definitionsgemäß auf Längenskalen, die klein sind gegen den Krümmungsradius der Spitze 1, wesentlich verändert, kann man davon ausgehen, dass die Annahme einer ebenen, unendlich ausgedehnten Spitze 1 eine sehr gute Näherung ist.

Zweitens hängt der zwischen Quantenpunkt 2 und Spitze 1 wirksame Anteil $\Delta\phi_{ext}(\mathbf{r})$ der Spannungsänderung $\Delta V_{crit}(\mathbf{r})$ von der Geometrie der Messanordnung, bestehend aus Spitze 1, Quantenpunkt 2 und Probenoberfläche 3, ab. Für die Messanordnung in Figur 1 ist er gegeben durch die Gatingeffizienz $G$: $\Delta\phi_{ext}(\mathbf{r})=G(\mathbf{r})\,\Delta V_{crit}(\mathbf{r})$. Dies kann unmittelbar aus Abbildung 3 geschlossen werden, für die gilt: $\Delta E_L=GeV_{crit}$ und $\Delta E_L=e\phi_{ext}$, wobei e die Elementarladung ist.

Die Gatingeffizienz $G$ ist eine Funktion der Geometrie der Messanordnung, bestehend aus Spitze 1, Quantenpunkt 2 und Probenoberfläche 3 bzw. Elektrode 5, und der Kapazitäten der Kondensatoren im Ersatzschaltbild Figur 2b. In jedem Falle ist die Gatingeffizienz G unabhängig von der lateralen Position der Spitze 1 über der Probenoberfläche 3 mit Nanostruktur 8, wenn die Nanostruktur 8 in der Probenoberfläche 3 liegt, d.h. keine von der Probenoberfläche 3 abweichende Topographie aufweist, da die Probenoberfläche 3 eben und lateral unendlich ausgedehnt ist. Für die Messanordnung in Figur 1b ist die Gatingeffizienz G zudem unabhängig vom Abstand zwischen Spitze 1 und Probenoberfläche 3 und etwaigen topographischen Eigenschaften der Nanostruktur 8. Für die Messanordnung in Figur 1a ist die Gatingeffizienz $G$ abhängig von $z_{tip}$ (definiert als Abstand zwischen Spitze 1 und Probenoberfläche 3) und $d,$ definiert als Abstand zwischen Quantenpunkt 2 und Spitze 1, und auch abhängig von der Topographie der Nanostruktur 8. Eine beispielhafte Berechnung der Gatingeffizienz $G(z_{tip},d)$ in der Messanordnung in Figur 1a, für einen festen Wert für $z_{tip}$, ist in Figur 7 gezeigt. Dabei wurde eine ebene, unendlich ausgedehnte Spitze 1 angenommen. Wegen des Zusammenhangs $d=z_{tip}-z$ lässt sich die Gatingeffizienz $G$ auch als Funktion von $z$ und $d$ schreiben.

Aus der Gatingeffizienz $G(z_{tip},d)$ und dem Abschirmfaktor $S(\mathbf{r})$ des lokalen elektrischen Potentials am Ort $\mathbf{r}=(x,y,z)$ lässt sich der Empfindlichkeitsfaktor $R(\mathbf{r},z_{tip},d)=S(\mathbf{r})/G(z_{tip},d)$ errechnen. Ein Empfindlichkeitsfaktor des Werts $R$ gibt an, dass man eine mittels Spannungsquelle 4 angelegte Spannung $\Delta(\Delta V_{crit})=R\,\Delta\phi_{loc}$ braucht, um eine Änderung des lokalen elektrischen Potentials $\Delta\phi_{loc}$ in Abwesenheit von Spitze 1 und Quantenpunkt 2 auszugleichen. Wegen des Zusammenhangs $d=z_{tip}-z$ lässt sich der Empfindlichkeitsfaktor R auch als Funktion von **r** und $d$ schreiben: $R(\mathbf{r},d)=S(\mathbf{r})/G(z,d)$ schreiben. Wenn S(**r**)=S(z), dann wird daraus R(z,d)=S(z)/G(z,d). Der reziproke Wert von R(z,d)=S(z)/G(z,d) ist in Figur 7 als Kurve 17 gezeigt.

Mit Hilfe des Empfindlichkeitsfaktors R kann das lokale elektrische Potential $\phi_{loc}(\mathbf{r})$, bezogen auf den Wert $\phi_{loc}(\mathbf{r}_0)$ bei $\mathbf{r}_0$, an dem $V_{crit}^0$ bestimmt wurde, aus $\Delta V_{crit}(\mathbf{r})$ wie folgt bestimmt werden: $\phi_{loc}(\mathbf{r})=R^{-1}(\mathbf{r},d)\,\Delta V_{crit}(\mathbf{r})$. Wenn S(**r**)≈S(z), dann gilt $\phi_{loc}(\mathbf{r})=R^{-1}(z,d)\,\Delta V_{crit}(\mathbf{r})$, oder in anderer Schreibweise $\phi_{loc}(\mathbf{r})=R^{-1}(z_{tip},d)\,\Delta V_{crit}(\mathbf{r})$. Der Empfindlichkeitsfaktor R kann einem Kalibrierlinienfeld entnommen werden. Ein solches Kalibrierlinienfeld ist in Figur 8 gezeigt. Gezeigt ist dort $R^{-1}(z_{tip},d)$ auf der Ordinate als Funktion von $z_{tip}$ auf der Abszisse. Jede der gezeigten Kalibrierkurven 18 gilt für einen anderen Abstand d zwischen Spitze 1 und Quantenpunkt 2. Das Kalibrierlinienfeld in Figur 8 wurde für eine ebene, unendlich ausgedehnte Spitze 1 berechnet. Für andere Spitzengeometrien und Ladungsverteilungen der Nanostruktur 8 können Kalibrierlinienfelder $R^{-1}$ mit Standardverfahren der Elektrostatik (Randwertprobleme) berechnet werden.

Drittens ist zu bemerken, dass bei Kenntnis des korrekten Empfindlichkeitsfaktors R(**r**,d) das lokale elektrische Potentialfeld bezogen auf den Wert $\phi_{loc}(\mathbf{r}_0)$ bei $\mathbf{r}_0$, im Prinzip immer durch $\phi_{loc}(\mathbf{r})=R^{-1}(\mathbf{r},d)\,\Delta V_{crit}(\mathbf{r})$ bestimmt werden kann. Allerdings ist zu berücksichtigen, dass die Bestimmung der Gatingeffizienz G mit Hilfe des Modells einer ebenen, unendlich ausgedehnten Spitze 1, wie in Figur 7 geschehen, nur in Ausnahmefällen statthaft ist. Der Grund ist der folgende: Da das Potentialfeld $\Delta\phi_{ext}(\mathbf{r})$, das auf die mittels Spannungsquelle 4 angelegte Spannung $\Delta V_{crit}$ zurückgeht, aufgrund der makroskopischen Ausdehnung der Probenoberfläche 3 makroskopische Dimensionen hat, ist auf diesem Längenmaßstab der endliche Krümmungsradius der Spitze 1 nicht zu vernachlässigen. Damit kommt es in der Nähe der Spitze, und damit auch an der Position des Quantenpunkts 2, an dem das elektrische Potential gemessen wird, zu einer Feldüberhöhung, die die tatsächliche Gatingeffizienz G über den nach dem Modell der ebenen, unendlich ausgedehnten Spitze 1 ermittelten Wert von G hinaus erhöht. Dementsprechend wird der Empfindlichkeitsfaktor R(**r**,d)=S(**r**)/G(z,d) reduziert.

Die Feldüberhöhung durch eine gekrümmte, kegelförmige oder sonst irgendwie geformte Spitze kann bei genauer Kenntnis ihrer Geometrie mit Standardverfahren der Elektrostatik (Randwertprobleme) bestimmt werden. Alternativ kann eine gegebene Spitze unbekannter Geometrie geeicht werden, indem zunächst $\Delta V_{crit}^{gauge}(\mathbf{r})$ über einer Nanostruktur bestimmt wird, deren lokales Potentialfeld $\phi_{gauge}(\mathbf{r})$, z.B. aus einer theoretischen Berechnung, bekannt ist. Damit kann ein Kalibrierfaktor K durch $K(\mathbf{r})=\phi_{gauge}(\mathbf{r})/(R^{-1}(\mathbf{r},d)\Delta V_{crit}^{gauge}(\mathbf{r}))$ bestimmt werden, wobei $R^{-1}(\mathbf{r},d)$ der nach dem Modell einer ebenen, unendlich ausgedehnten Spitze 1 bestimmte Empfindlichkeitsfaktor ist. Dieser Kalibrierfaktor K kann dann zur Bestimmung des lokalen elektrischen Potentialfeldes einer beliebigen Nanostruktur 8 nach $\phi_{loc}(\mathbf{r})=R^{-1}(\mathbf{r},d)K(\mathbf{r})\,\Delta V_{crit}(\mathbf{r})$ benutzt werden.

Ein Beispiel einer solchen Kalibrierung ist in Figur 9 gezeigt.

Wesentliche Merkmale der Erfindung sind:

(M1) Die Verschiebung der Energieniveaus des Quantenpunkts 2 kann stromlos erfolgen, daher auch für große Abstände zwischen Spitze 1 und Probenoberfläche 3, bei denen zwischen Probenoberfläche 3 und Quantenpunkt 2 (Kondensator 7 in Figur 2b) kein Tunnelstrom mehr fließt. Dadurch lässt sich das elektrische Potentialfeld auch fern der Probenoberfläche oder über einer elektrisch isolierenden Probe bestimmen. Ferner ist für das erfindungsgemäße Verfahren kein wie auch immer geartetes Signal von der Probenoberfläche 3 notwendig. Damit kann die Messung des elektrischen Potentialfelds im freien Raum vollkommen kontaktfrei erfolgen. Die Probenoberfläche 3 hat einzig den Zweck, als Auflage für die Nanostruktur 8 und in der Messanordnung in Figur 2d auch als Gegenelektrode zu dienen. In der Messanordnung in Figur 2e wird die Probenoberfläche als Gegenelektrode nicht benötigt und dient nur als Auflage für die Nanostruktur 8. Wenn in der Messanordnung in Figur 2e eine Auflage für die Nanostruktur nicht benötigt wird, dann ist die Probenoberfläche 3 vollkommen entbehrlich. Es ergibt sich damit sowohl in der Messanordnung in Figur 1a/2d als auch in der Messanordnung in Figur 1b/2e die Möglichkeit, im kompletten Halbraum oberhalb der Probenoberfläche 3 das dort durch die Ladungsverteilung z. B. einer Nanostruktur 8, die sich auf oder in der Probenoberfläche 3 befindet, bewirkte elektrische Potentialfeld schichtweise abzubilden und damit eine dreidimensional Karte des elektrischen Potentialfelds zu erzeugen. Durch Verwendung der in Figur 1b/2e abgebildeten Messanordnung ist das erfindungsgemäße Verfahren zur Messung elektrischer Potentialfelder auch für nichtleitende Proben anwendbar.

(M2) Die Energieniveaus des Quantenpunkts 2 sind auf der Energieachse hinreichend scharf. Dies wird durch eine schwache elektronische Ankopplung des Quantenpunkts 2 an das Elektronenreservoir der metallischen Spitze 1 erreicht. Konkret kann dies auch durch eine dünne isolierende Schicht oder eine geeignete Bindung zwischen Quantenpunkt 2 und metallischer Spitze 1 erreicht werden.

(M3) Durch hinreichend scharfe Energieniveaus des Quantenpunkts 2 sind sehr kleine Veränderungen (Größenordnung 1 mV) der mittels Spannungsquelle 4 angelegten Spannung, bei dem der Quantenpunkt 2 eine Ladungsänderung (Aufnahme oder Abgabe eines Elektrons) erfährt, und damit sehr kleine lokale elektrische Potentialfelder, messbar.

(M4) Der Quantenpunkt 2 wirkt als lokale Sonde für das elektrische Potentialfeld. Nur das gemittelte elektrische Potentialfeld im Raumbereich des Quantenpunkt 2 beeinflusst die Messung.

(M5) Der Quantenpunkt 2 wirkt als Filter. Nur die Arten von Potentialfeldern, die zu einer Ladungsänderung im Quantenpunkt 2 führen, werden gemessen. Alle anderen Kräfte und Potentialfelder, insbesondere auch elektrische Kräfte und Potentialfelder, die ausschließlich auf weiter entfernt liegende Teile der Spitze 1 wirken, beeinflussen das Messsignal nicht.

(M6) Der Quantenpunkt 2 wirkt als Verstärker. Solange ein lokales elektrisches Potentialfeld zu einer Ladungsänderung des Quantenpunkts 2 (Aufnahme oder Abgabe eines Elektrons) führt, kann diese registriert werden und im Ergebnis eine Messung des lokalen elektrischen Potentialfelds erfolgen, und zwar unabhängig von der Stärke des lokalen elektrischen Potentialfeldes, das die Ladungsänderung des Quantenpunkts 2 herbeiführt. Im speziellen Fall, wenn die Registrierung der Ladungsänderung des Quantenpunkts 2 mit Hilfe einer Kraftmessung erfolgt, wirkt der Quantenpunkt 2 als Kraftverstärker: Je nach Ausgestaltung des Quantenpunkts 2 kann die mit einem Rasterkraftmikroskop nach Ladungsänderung des Quantenpunkts 2 gemessene Kraftveränderung sehr viel größer sein als die Kraft, die dem lokalen elektrischen Potentialfeld am Ort der Messung, würde sie direkt gemessen, entspräche.

(M7) Die Kombination aus Quantenpunkt 2 und Spitze 1 erlaubt beim Abrastern der Probenoberfläche 3 die Unterscheidung zwischen rein topographischen Signalen, die z. B. auf die Topographie einer Nanostruktur 8 zurückgehen, und Signalen, die auf elektrische Potentialfelder, z. B. hervorgerufen durch eine Nanostruktur 8, zurückgehen. Ein Beispiel dieser Unterscheidung ist in Figuren 4h bis 4m gezeigt. Die Unterscheidung zwischen topographischen Signalen und Signalen, die auf elektrische Potentialfelder zurückgehen, kann mit folgendem Verfahren durchgeführt werden:

Notwendige Vorrausetzung dieses Verfahrens ist, dass man für einen Quantenpunkt 2 bei mindestens zwei unterschiedlichen mittels der Spannungsquelle 4 angelegten Spannungen Ladungsänderungen beobachten kann, deren kritische Spannungen $V_{crit}^{0,i}$, wobei $i$ unterschiedliche Ladungsänderungen bezeichnet, eine unterschiedliche Abhängigkeit vom Abstand zwischen Spitze 1 und Probenoberfläche 3 aufweisen, also die Differenzen $\delta V_{crit}^{0,ij} = V_{crit}^{0,i} - V_{crit}^{0,j}$ sich mit dem Abstand zwischen Spitze 1 und Probenoberfläche 3 ändern. Ein Beispiel, das nicht als einschränkend verstanden werden soll, ist Änderung des Abstands auf der Spannungsachse zwischen den Peaks 10a und 10b in Figur 5a als Funktion von $z_{tip}$, welches den Abstand zwischen Spitze 1 und Probenoberfläche 3 angibt.

Im Gegensatz dazu führt für einen gegebenen Abstand zwischen Spitze 1 und Probenoberfläche 3 die (hypothetische) Veränderung des zu messenden lokalen elektrischen Potentialfelds an einem festen Ort für alle kritischen Spannungen $V_{crit}^{0,i}$ zu einer parallelen Verschiebung um den gleichen Absolutwert $\Delta V_{crit}$, so dass die Differenzen $\delta V_{crit}^{ij} = V_{crit}^{i} - V_{crit}^{j}$ unabhängig vom Wert des zu messenden elektrischen Potentials sind und damit gilt $\delta V_{crit}^{ij} = \delta V_{crit}^{0,ij} = V_{crit}^{0,i} - V_{crit}^{0,j}$.

Wenn eine gegebene Nanostruktur 8 sowohl eine von der Probenoberfläche 3 abweichende Topographie hat als auch ein zu messendes lokales elektrisches Potentialfeld erzeugt, dann können durch Vergleich mit der Referenzmessung in Abwesenheit des zu messenden lokalen elektrischen Potentialfelds, d.h. aus $V_{crit}^{0,i}$ und $V_{crit}^{0,j}$ als Funktion von z, die beiden Anteile, d.h. Topographie und elektrisches Potentialfeld der Nanostruktur 8, voneinander getrennt werden. Dieses wird im Folgenden für den Fall gezeigt, dass eine der Ladungsänderungen des Quantenpunkts 2 bei negativen kritischen Spannungen $V_{crit}^{-}$, eine andere bei positiven kritischen Spannungen $V_{crit}^+$ erfolgt, wie in Figur 5a gezeigt, ohne das dies eine Einschränkung darstellen soll.

Zur Separation von Topographie und elektrischem Potentialfeld werden zunächst an einem Referenzort A auf der Probenoberfläche 3, an dem das zu messende elektrische Potential null ist und die Topographie der Topographie der reinen Probenoberfläche ohne Nanostruktur 8 entspricht, die Werte $V_{crit}^{0,+}$ und $V_{crit}^{0,-}$ als Funktion des Abstands zwischen Spitze 1 und Probenoberfläche 3 bestimmt. In Figur 5a wurde ein Rasterkraftmikroskop zur Bestimmung von $V_{crit}^{0,+}$ (Peaks 10b) und $V_{crit}^{0,-}$ (Peaks 10a) benutzt, ohne dass dies eine Einschränkung darstellt.

Dann werden $V_{crit}^{0,+}$, $V_{crit}^{0,-}$ und $\delta V_{crit}^0 = V_{crit}^{0,+} - V_{crit}^{0,-}$ über dem Abstand zwischen Spitze 1 und Probenoberfläche 3 aufgetragen. Dies ist in Figuren 5b und c beispielhaft für $V_{crit}^{0,-}$ und $\delta V_{crit}^0$ gezeigt. In Figuren 5a, 5b und 5c wird der Abstand zwischen Spitze 1 und Probenoberfläche 3 mit $z_{tip}$ bezeichnet. Nach Figuren 5a und 5b ändert sich die Differenz $\delta V_{crit}^0 = V_{crit}^{0,+} - V_{crit}^{0,-}$ monoton mit dem Abstand zwischen Spitze 1 und Probenoberfläche 3.

Nun wird ein fester Abstand $z_{tip} = a$ zwischen Spitze 1 und Oberfläche 3 gewählt. Dann wird die Spitze 1 mit dem Quantenpunkt 2 in konstantem Abstand a zur Probenoberfläche 3 an einen Ort B über der Nanostruktur 8 gebracht, an dem ein zu messendes elektrisches Potentialfeld vorliegt. Die Topographie der Nanostruktur 8 führt zu einer Veränderung des effektiven Abstands zwischen Spitze 1 und Oberfläche, da nun die Oberfläche der Nanostruktur 8 statt der Probenoberfläche 3 die tatsächliche Oberfläche darstellt.

An Punkt B über der Nanostruktur 8 werden dann $V_{crit}^+$, $V_{crit}^-$ und $\delta V_{crit} = V_{crit}^+ - V_{crit}^-$ bestimmt. Aus der Differenz $\delta V_{crit} = V_{crit}^+ - V_{crit}^-$ kann mittels der für $\delta V_{crit}^0$ aufgenommen Eichkurve Figur 5b der Abstand zwischen Spitze 1 und Nanostruktur 8 bestimmt werden. Dies ist in Figur 5b durch gestrichelte Pfeile angedeutet: Man sucht mittels der Eichkurve den zum Wert von $\delta V_{crit}$ gehörenden Wert von $z_{tip}$, den wir als $b$ bezeichnen. Damit lässt sich das Topographiesignal der Nanostruktur 8 als $a$-$b$ bestimmen.

Die Bestimmung des elektrischen Potentialfeldes folgt dann nach der in (P6) beschriebenen Methode aus der Veränderung der kritischen Spannung $V_{crit}$, wobei die am Ort A aufgenommene Eichkurve Figur 5c (oder ihr Äquivalent für $V_{crit}^{0,+}$) benutzt wird, um für den Abstand $z_{tip} = b$ den Referenzwert $V_{crit}^{0,-}$ (oder sein Äquivalent $V_{crit}^{0,+}$) zu bestimmen. Dies ist in Figur 5c durch gestrichelte Pfeile angedeutet: Man sucht mittels der Eichkurve den zum Wert von $z_{tip} = b$ gehörenden Wert von $V_{crit}^{0,-}$. Dieser Wert wird dann als neuer Referenzwert zur Bestimmung von $\Delta V_{crit}^-$ verwendet, in dem der tatsächliche am Ort B gemessene Wert $V_{crit}^-$ auf das mittels Eichkurve bestimmte $V_{crit}^{0,-}$ bezogen wird: $\Delta V_{crit}^- = V_{crit}^- - V_{crit}^{0,-}$. Aus diesem $\Delta V_{crit}^-$ wird dann nach (P6) das lokale elektrische Potential an Punkt B bestimmt.

(M8) Da das erfindungsgemäße Verfahren Messungen des lokalen elektrischen Potentialfelds einer Elementarladung $e$ ($e = 1,603 \cdot 10^{-19}$ C) bis zu einem Abstand von 1 $\mu$m erlaubt (dies entspricht einer Empfindlichkeit von 1mV in der Detektion von $\Delta V_{crit}$), kann das erfindungsgemäße Verfahren zum kontaktfreien Auslesen von elektrischen Speicherelementen, in denen ein einzelnes Informationsbit durch eine oder mehrere Elementarladungen e in einer Nanostruktur im Größenbereich eines Angström gespeichert wird, genutzt werden. Wegen ihrer hohen lateralen Auflösung (0.5 nm) ist das erfindungsgemäße Verfahren auch dann zum kontaktfreien Auslesen von Anordnungen von Speicherzellen anwendbar, wenn die einzelnen Speicherelemente Abstände von 0.5 nm voneinander haben. Weiterhin kann aufgrund der Tatsache, dass die Messung des lokalen elektrischen Potentialfelds stromlos erfolgt, ausgeschlossen werden, dass der Lesevorgang des Informationsspeichers mittels dem erfindungsgemäßen Verfahren mit einem ungewollten Schreibvorgang, der auf einem elektrischen Strom basiert, einhergeht.

Im Folgenden werden Verfahren beschrieben, die nicht einschränkend auszulegen sind. Das kombinierte System aus Quantenpunkt 2 und Spitze 1 des Rastersondenmikroskops wird im Folgenden "Quantenpunktsensor" genannt. Es werden drei beispielhafte Verfahren zur lokalen bzw. abbildenden Messung elektrischer Potentialfelder mittels des Quantenpunktsensors aufgeführt. Dabei wird von der Verwendung eines Rasterkraftmikroskops zur Bestimmung der Ladungsänderung des Quantenpunkts (Aufnahme oder Abgabe eines Elektrons) ausgegangen. Weder die Liste dieser Verfahren noch die Verwendung eines Rasterkraftmikroskops als spezielle Realisierung eines Rastersondenmikroskops ist einschränkend aufzufassen. Alle Verfahren haben Schritte gemein, die zunächst aufgeführt sind.

Bei der Durchführung des erfindungsgemäßen Verfahrens wird die mit dem Quantenpunkt 2 beaufschlagte Spitze 1 des Rasterkraftmikroskops über eine zu untersuchende Probenoberfläche 3 geführt. Dabei werden nacheinander die Positionen angefahren, an denen das elektrische Potentialfeld gemessen werden soll. Diese Positionen können sich sowohl in ihren lateralen als auch in ihren vertikalen Koordinaten bezüglich der Probenoberfläche voneinander unterscheiden, da das Verfahren keinen direkten Kontakt zur Probenoberfläche 3 erfordert und die Messung dreidimensionaler Karten des elektrischen Potentialfelds erlaubt.

An einer Referenzposition, an der kein zu messendes elektrisches Potentialfeld vorliegt, wird eine kritische Spannung $V_{crit}^0$ bestimmt, die zur Ladungsänderung des Quantenpunkts 2 (Aufnahme oder Abgabe eines Elektrons) führt. Falls für eine ganze Serie von positiven und negativen kritische Spannungen $V_{crit}^0$ Ladungsänderungen des Quantenpunkts 2 auftreten, ist es ausreichend, zwei kritische Spannungen zu bestimmen, deren Verhalten mit dem Abstand zwischen Spitze 1 und Probenoberfläche 3 unterschiedlich ist. Dies können, ohne dass dieses eine Einschränkung darstellt, eine positive kritische Spannung $V_{crit}^{0,+}$ und eine negative kritische Spannung $V_{crit}^{0,-}$ sein.

Zur Bestimmung der kritischen Spannungen $V_{crit}^0$ wird die mittels Spannungsquelle 4 angelegte Spannung variiert und das Rasterkraftmikroskop gemäß seines Standard-Betriebsmodus verwendet, um die abrupte Änderung der Kraft auf den Quantenpunktsensor zu detektieren, die als Folge der Ladungsänderung des Quantenpunkts 2 bei den kritischen Spannungen $V_{crit}^0$ auftreten. In einer besonders vorteilhaften Realisierung wird dies durch eine Detektion im amplitudenmodulierten dynamischen Modus des Rasterkraftmikroskops durchgeführt, der mit der Frequenzverschiebung des Kraftsensors des Rasterkraftmikroskops ein Signal liefert, das proportional zum Kraftgradienten ist und damit sehr sensitiv auf abrupte Änderungen der Kraft reagiert. Die abrupte Änderung der Kraft infolge der Ladungsänderung führt hierbei zu einem besonders starken Signal.

Mögliche weitere Messgrößen zur Detektion der Ladungsänderung des Quantenpunkts 2 sind, erstens, Änderungen der Kantileverauslenkung im statischen Modus des Rasterkraftmikroskops und, zweitens, Änderungen der Energiedissipation im dynamischen Modus des Rasterkraftmikroskops.

Die Bestimmung der mittels Spannungsquelle 4 angelegten kritischen Spannungen $V_{crit}$ an allen anderen gewünschten Positionen des Quantenpunktsensors über der Probenoberfläche 3 und über einer Nanostruktur 8 kann nun in folgenden Verfahren erfolgen.

(V1) Spektroskopisches Verfahren:

Hierbei wird die oben beschriebene Methode an jedem weiteren Punkt wiederholt. Man erhält auf diese Weise eine dreidimensionale Karte der kritischen Spannungen $V_{crit}$, aus denen nach den in (P6) und (M7) beschriebenen Verfahren das elektrische Potentialfeld bestimmt werden kann.

(V2) Verfahren mit direkter Abbildung:

Hierbei wird die endliche Breite (im Folgenden als "Peakbreite" bezeichnet) des Spannungsintervals um $V_{crit}$ herum ausgenutzt, in dem die Ladungsänderung des Quantenpunkts 2 stattfindet. Dazu wird die angelegte Spannung auf einen festen Wert nahe der kritischen Spannung $V_{crit}$, bei der die Ladungsänderung des Quantenpunktes 2 stattfindet, eingestellt und der Standardbetriebsmodus eines Rasterkraftmikroskops zur Abbildung verwendet, während der zu untersuchende Bereich des Halbraums über der Probe abgerastert wird. In einer besonders vorteilhaften Realisierung wird der Spannungswert eingestellt, für den die Änderung des Signals des Rasterkraftmikroskops mit der angelegten Spannung maximal ist. Wenn die Änderung der kritischen Spannung $V_{crit}$ die halbe Peakbreite nicht überschreitet und somit eine eindeutige Beziehung zwischen dem Signal des Rasterkraftmikroskops und der kritischen Spannung $V_{crit}$ besteht, kann das Signal des Rasterkraftmikroskops direkt als Variation der kritischen Spannung $V_{crit}$ interpretiert werden und entsprechend der Verfahren in (P6) und (M7) kalibriert werden. Wenn die Änderung der kritischen Spannung $V_{crit}$ die Peakbreite übersteigt, können die Linien in einer zweidimensionalen Abbildung, entlang derer die Änderung des Signals des Rasterkraftmikroskops maximal ist, als Linien konstanten elektrischen Potentials, d. h. als Äquipotentiallinien des elektrischen Potentialfelds, aufgefasst werden. Zwei mit diesem Verfahren aufgenommene zweidimensionale Bilder, die Äquipotentiallinien bei zwei unterschiedlichen Werten des elektrischen Potentials zeigen,

sind in Figuren 10c und 10d gezeigt. Ebenso können, wenn die eingestellte Spannung entsprechend der Veränderung von $V_{crit}$ mit dem Abstand zwischen Spitze 1 und Probenoberfläche 3 angepasst wird, in einer dreidimensionalen Abbildung Flächen, auf denen die Änderung des Signals des Rasterkraftmikroskops maximal ist, als Flächen konstanten elektrischen Potentials, d. h. als Äquipotentialflächen des elektrischen Potentialfelds, aufgefasst werden.

(V3) Regelschleifengesteuertes Verfahren:

Hierbei wird eine Regelschleife genutzt, um die angelegte Spannung als Stellgröße während des Abrasterns des Halbraums oberhalb der Probenoberfläche kontinuierlich an dem kritischen Wert $V_{crit}$ zu halten, bei dem die Ladungsänderung des Quantenpunktes 2 stattfindet. Ein Beispiel für die Regelgröße, welches jedoch nicht einschränkend zu sehen ist, ist die Ableitung der Frequenzverschiebung des Kraftsensors des Rasterkraftmikrokops nach der angelegten Spannung. Diese kann beispielsweise mittels eines Lock-in Verstärkers gemessen werden. Das Ziel der Regelung ist, die Regelgröße fortwährend bei null zu halten. Im Bereich der Peakbreite variiert die Regelgröße stark mit der Stellgröße, was eine gute Regelung ermöglicht. In einer besonders vorteilhaften Realisierung wird dies für mindestens zwei unterschiedliche mittels der Spannungsquelle 4 angelegten Spannungen, bei denen Ladungsänderungen des Quantenpunkts beobachtet werden, deren kritische Spannungen $V_{crit}^{0,i}$ eine unterschiedliche Abhängigkeit vom Abstand zwischen Spitze 1 und Probenoberfläche 3 aufweisen, durchgeführt. Man erhält auf diese Weise dreidimensionale Karten der kritischen Spannungen $V_{crit}^{i}$, die entsprechend der Verfahren in (P6) und (M7) zur Bestimmung des elektrischen Potentialfelds verwendet werden können.

Im Folgenden wird das Rastersondenmikroskop beispielhaft dargestellt, ohne dass die Darstellung einschränkend auszulegen sein soll.

In einem konkreten Ausführungsbeispiel ist der Quantenpunkt 2 ein PTCDA Molekül, dass mit der Spitze 1 eines Rasterkraftmikroskops von einer Ag(111) Oberfläche aufgenommen wurde (Figur 4a). Aus tunnelspektroskopischen Untersuchungen weiß man, dass die elektronische Kopplungsfunktion der Bindung des Moleküls an die Spitze über das terminale Sauerstoffatom hinreichend schwach ist, so dass sich die scharfen Molekülniveaus nur unwesentlich verbreitern (Breite ca. 10 meV), was eine besonders vorteilhafte Ausgestaltung ist. Im konkreten Ausführungsbeispiel wird die Kraftdetektion durch einen dynamischen Kraftsensor des Typs QPlus durchgeführt. Bei diesem Kraftsensor ist die Frequenzverschiebung proportional zum wirkenden Kraftgradienten. Bei der Ladungsänderung des Quantenpunkts 2, an dem ein Sprung in der Kraft zwischen Spitze 1 und Probenoberfläche 3 auftritt, tritt daher eine scharfe Spitze im Signal der Frequenzverschiebung auf (Figur 5a). Die Breite dieser Spitze steht, für hinreichend kleine Oszillationsamplituden des QPlus Sensors, im direkten Zusammenhang mit der Schärfe der Niveaus des Quantenpunkts. Im konkreten Ausführungsbeispiel wurde der QPlus Sensor mit Spitze 1 und Quantenpunkt 2 über eine Ag(111) Probenoberfläche 3 gerastert, auf der sich als Nanostruktur 8 ein weiteres PTCDA Molekül befand. Aufgrund der unterschiedlichen Elektronegativität der chemischen Elemente in diesem Molekül hat dieses Molekül ein elektrisches Quadrupolmoment. Die auf dieses Quadrupolmoment zurückgehende Verteilung des lokalen elektrischen Potentialfeldes wurde mit dem QPlus Sensor mit Spitze 1 und Quantenpunkt 2 abgebildet (Figur 4b-4m), indem das spektroskopische Verfahren (V1) mit Verfahren (P6) und (M7) kombiniert wurde. Ferner wurde ein Ag Adatom auf der Ag(111) Oberfläche mit dem gleichen Verfahren wie das PTCDA Molekül abgebildet (Figur 9a-9c), um das gemessene lokale elektrische Feld des PTCDA Moleküls zu kalibrieren. Schließlich wurden Äquipotentiallinien über PTCDA Inseln auf Ag(111) mit dem Verfahren (V2) abgebildet (Figur 10c, 10d).

## Patentansprüche

1. Verfahren zur Messung eines lokalen elektrischen Potentialfeldes mittels eines Rastersondenmikroskops, an dessen Spitze ein Quantenpunkt angebracht ist, wobei der Quantenpunkt (2) mittels der Spitze (1), an der er angebracht ist, an den Ort (r), an dem das elektrische Potentialfeld gemessen wird, geführt wird, **dadurch gekennzeichnet, dass** die kritische Spannung gemessen wird, bei der eine Ladungsänderung des Quantenpunktes (2) stattfindet, wobei zur Bestimmung der kritischen Spannung $V_{crit}^{0}$, die mittels einer Spannungsquelle (4) angelegte Spannung variiert wird und das Rasterkraftmikroskop gemäß eines Standard-Betriebsmodus verwendet wird, um die abrupte Änderung der Kraft auf den aus den Quantenpunkt (2) bestehenden Quantenpunktsensor zu detektieren, die als Folge der Ladungsänderung des Quantenpunktes (2) bei den kritischen Spannungen $V_{crit}^{0}$ auftreten und dass das lokale Potential $\Phi_{loc}$ bezogen auf den Wert für das lokale Potential bei dem Wert an einem Referenzort ro durch die Formel

$$\Phi_{loc}\,(r) = R^{-1}\,(r,d)\,\Delta V_{crit}\,(r)$$

bestimmt wird, wobei
$\Phi_{loc}$ = Lokales elektrisches Potential
r = Ort der Messung,
d = Abstand zwischen dem Quantenpunkt (2) und der Spitze (1) $R^{-1}$ = reziproker Empfindlichkeitsfaktor
$\Delta V_{crit}$ (r) = Spannungsänderung an dem Ort an dem die Spannung gemessen wird.

2. Verfahren nach Anspruch 1,
**dadurch gekennzeichnet,**
**dass** der Quantenpunkt (2) mittels der Spitze (1), an der er angebracht ist, an einen Referenzort, an dem kein zu messendes lokales elektrisches Potentialfeld vorliegt, geführt wird, und die kritische Spannung gemessen wird, bei der eine Ladungsänderung des Quantenpunktes (2) stattfindet, und dass durch Vergleich der kritischen Spannungen am Referenzort und am Ort, an dem das lokale elektrische Potentialfeld gemessen wird, das lokale elektrische Potentialfeld an diesem Ort gemessen wird.

3. Verfahren nach Anspruch 1 oder 2,
**dadurch gekennzeichnet,**
**dass** die Messung des lokalen elektrischen Potentialfelds mittels Abschirmfaktor, Gatingeffizienz und Empfindlichkeitsfaktor quantitativ durchgeführt wird.

4. Verfahren nach Anspruch 1 oder 2,
**dadurch gekennzeichnet,**
**dass** eine Kalibrierung des gemessenen lokalen elektrischen Potentialfelds mittels eines bekannten elektrischen Potentialfeldes einer Referenzstruktur durchgeführt wird.

5. Verfahren nach einem der Ansprüche 1 bis 4,
**dadurch gekennzeichnet,**
**dass** ein elektrisches Speicherelement ausgelesen wird.

6. Verfahren nach einem der Ansprüche 1 bis 5,
**dadurch gekennzeichnet,**
**dass** die Messung des lokalen elektrischen Potentialfelds kontaktfrei erfolgt.

7. Verfahren nach einem der Ansprüche 1 bis 6,
**dadurch gekennzeichnet,**
**dass** die Messung des lokalen elektrischen Potentialfelds oberhalb einer isolierenden Probe erfolgt.

8. Verfahren nach einem der Ansprüche 1 bis 7,
**dadurch gekennzeichnet,**
**dass** die Ladungsänderung des Quantenpunktes (2) bestimmt wird durch eine Kraftänderung, die entweder mittels Messung der Frequenzverschiebung im amplitudenmodulierten dynamischen Modus eines Rasterkraftmikoskops oder mittels Änderung der Kantileverauslenkung im statischen Modus eines Rasterkraftmikoskops oder mittels Messung der Energiedissipation im amplitudenmodulierten dynamischen Modus eines Rasterkraftmikoskops gemessen wird.

9. Verfahren nach einem der Ansprüche 1 bis 8,
**dadurch gekennzeichnet,**
**dass** zwei unterschiedliche Ladungsänderungen des Quantenpunkts (2), deren kritische Spannungen unterschiedlich vom Abstand zwischen Spitze (1) und Probenoberfläche (3) abhängen, gemessen werden, um so das Topographiesignal vom Signal des elektrischen Potentialfelds zu trennen.

10. Verfahren nach einem der Ansprüche 1 bis 9,
**dadurch gekennzeichnet,**
**dass** eine zweidimensionale oder dreidimenisonale Abbildung des lokalen elektrischen Potentialfelds vorgenommen wird, indem die Messung an verschiedenen Punkten im Halbraum oberhalb der Probenoberfläche wiederholt wird.

11. Verfahren nach einem der Ansprüche 1 bis 10,
**dadurch gekennzeichnet,**
**dass** die angelegte Spannung auf einen festen Wert nahe der kritischen Spannung, bei der die Ladungsänderung des Quantenpunktes (2) stattfindet, eingestellt und der Standardbetriebsmodus eines Rasterkraftmikroskops zur Abbildung verwendet wird, während der zu untersuchende Bereich des Halbraums über der Probe abgerastert wird.

12. Verfahren nach Anspruch 11,
**dadurch gekennzeichnet,**
**dass** eine eindeutige Beziehung zwischen dem Signal des Rasterkraftmikroskops und der kritischen Spannung besteht und das Signal des Rasterkraftmikroskops direkt als Variation der kritischen Spannung interpretiert wird.

13. Verfahren nach Anspruch 11,
**dadurch gekennzeichnet,**
**dass** Linien in einer zweidimensionalen Abbildung, entlang derer die Änderung des Signals des Rasterkraftmikroskops maximal ist, als Linien konstanten elektrischen Potentials, d. h. als Äquipotentiallinien des lokalen elektrischen Potentialfelds, aufgefasst werden.

14. Verfahren nach Anspruch 11,
**dadurch gekennzeichnet,**
**dass** die eingestellte Spannung entsprechend der Veränderung der kritischen Spannung mit dem Abstand zwischen Spitze (1) und Probenoberfläche (3) angepasst wird und dass Flächen in einer dreidimensionalen Abbildung, entlang derer die Änderung des Signals des Rasterkraftmikroskops maximal ist, als Flächen konstanten elektrischen Potentials, d. h. als Äquipotentialflächen des lokalen elektrischen Potentialfelds, aufgefasst werden.

15. Verfahren nach einem der Ansprüche 1 bis 10, **dadurch gekennzeichnet,**
**dass** die angelegte Spannung als Stellgröße während des Abrasterns des Halbraums oberhalb der Probenoberfläche kontinuierlich an dem kritischen Wert gehalten wird, bei dem die Ladungsänderung des Quantenpunktes (2) stattfindet.

**Claims**

1. A method for measuring a local electrical potential field by means of a scanning probe microscope, on the tip of which a quantum dot is arranged, wherein the quantum dot (2) is guided by means of the tip (1), on which it is arranged, to the location (r) where the electrical potential field is measured, **characterized in that** the critical

   voltage is measured, at which a change in charge of the quantum dot (2) takes place, wherein, for the measurement of the critical voltage $V_{crit}^{0}$, the voltage applied by means of a voltage source (4) is varied and the scanning force microscope is used in accordance with a standard operating mode to detect the abrupt change in force on the quantum dot sensor consisting of the quantum dot (2), occurring as a result of the change in charge of the quantum dot (2) in the case of the critical voltages $V_{crit}^{0}$ and that the local potential $\phi_{loc}$, based on the value for the local potential at the value at a reference location $r_0$, is determined by the formula

$$\phi_{loc}(r) = R^{-1}(r,d)\,\Delta V_{crit}(r)$$

   wherein
   $\phi_{loc}$ = local electrical potential
   r = location of the measurement,
   d = distance between the quantum dot (2) and the tip (1) $R^{-1}$ = reciprocal sensitivity factor
   $\Delta V_{crit}(r)$ = change in voltage at the location where the voltage is measured.

2. A method according to claim 1,
   **characterized in**
   **that** the quantum dot (2) is guided by means of the tip (1), on which it is arranged, to a reference location where there is no local electrical potential field to be measured, and the critical voltage is measured at which a change in charge of the quantum dot (2) takes place, and that, by comparing the critical voltages at the reference location and at the location where the local electrical potential field is measured, the local electrical potential field is measured at this location.

3. A method according to claim 1 or 2,
   **characterized in**
   **that** the measurement of the local electrical potential field is carried out quantitatively by means of shielding factor, gating efficiency and sensitivity factor.

4. A method according to claim 1 or 2,
   **characterized in**
   **that** a calibration of the measured local electrical potential field is carried out by means of a known electrical potential field of a reference structure.

5. A method according to any one of claims 1 to 4,
   **characterized in**
   **that** an electrical storage element is read out.

6. A method according to any one of claims 1 to 5,
   **characterized in**
   **that** the measurement of the local electrical potential field takes place without contact.

7. A method according to any one of claims 1 to 6,
   **characterized in**
   **that** the measurement of the local electrical potential field takes place above an insulating sample.

8. A method according to any one of claims 1 to 7,
   **characterized in**
   **that** the change in charge of the quantum dot (2) is determined by a change in force, which is measured either by measuring the frequency shift in the amplitude-modulated dynamic mode of a scanning force microscope or by changing the cantilever deflection in the static mode of a scanning force microscope or by measuring the energy dissipation in the amplitude-modulated dynamic mode of a scanning force microscope.

9. A method according to any one of claims 1 to 8,
   **characterized in**
   **that** two different changes in charge of the quantum dot (2), the critical voltages of which depend differently on the distance between the tip (1) and the sample surface (3), are measured in order to separate the topography signal from the signal of the electrical potential field.

10. A method according to any one of claims 1 to 9,
    **characterized in**
    **that** a two-dimensional or three-dimensional image of the local electrical potential field is made by repeating the measurement at different points in the half-space above the sample surface.

**11.** A method according to any one of claims 1 to 10, **characterized in that** the applied voltage is set to a fixed value close to the critical voltage at which the change in charge of the quantum dot (2) takes place and the standard operating mode of a scanning force microscope is used for imaging while the area of the half-space to be examined is scanned above the sample.

**12.** A method according to claim 11, **characterized in that** there exists a clear relationship between the signal of the scanning force microscope and the critical voltage, and the signal of the scanning force microscope is interpreted directly as a variation in the critical voltage.

**13.** A method according to claim 11, **characterized in that** lines in a two-dimensional image, along which the change in the signal of the scanning force microscope is at a maximum, are regarded as lines of constant electrical potential, i.e. as equipotential lines of the local electrical potential field.

**14.** A method according to claim 11, **characterized in that** the set voltage is adjusted corresponding to the change in the critical voltage with the distance between tip (1) and sample surface (3) and that surfaces in a three-dimensional image, along which the change in the signal of the scanning force microscope is at a maximum, are regarded as surfaces of constant electrical potential, i.e. as equipotential surfaces of the local electrical potential field.

**15.** A method according to any one of claims 1 to 10, **characterized in that** the applied voltage as a manipulated variable, during the scanning of the half-space above the sample surface, is continuously kept at the critical value at which the change in charge of the quantum dot (2) takes place.

**Revendications**

**1.** Procédé de mesure d'un champ de potentiel électrique local au moyen d'un microscope à sonde locale, à la pointe duquel est mis un point quantique, dans lequel on fait passer le point (2) quantique, au moyen de la pointe (1) où il est mis, à l'emplacement (r), où l'on mesure le champ de potentiel électrique, **caractérisé en ce que** l'on mesure la tension critique pour laquelle une variation de charge du point (2) quantique se produit, dans lequel, pour la détermination de la tension $V_{crit}^0$ critique, on fait varier la tension appliquée au moyen d'une source (4) de tension et on utilise le microscope à force atomique suivant un mode de fonctionnement standard pour détecter la variation abrupte de la force sur le capteur à point quantique constitué du point (2) quantique, qui se produit en raison de la variation de charge du point (2) quantique aux tensions $V_{crit}^0$ critiques et **en ce que** l'on détermine le potentiel $\Phi_{loc}$ local rapporté à la valeur du potentiel local pour la valeur à un emplacement $r_0$ de référence par la formule

$$\Phi_{loc}(r) = R^{-1}(r,d)\Delta V_{crit}(r)$$

dans laquelle
$\Phi_{loc}$ = potentiel électrique local,
r = emplacement de la mesure,
d = distance entre le point (2) quantique et la pointe (1),
$R^{-1}$ = inverse du facteur de sensibilité,
$\Delta V_{crit}(r)$ = variation de la tension à l'emplacement où l'on mesure la tension.

**2.** Procédé suivant la revendication 1, **caractérisé en ce que** l'on fait passer le point (2) quantique, au moyen de la pointe (1) où il est mis, en un emplacement de référence où il n'y a pas de champ de potentiel électrique local à mesurer, et on mesure la tension critique, pour laquelle il se produit une variation de charge du point n(2) quantique et **en ce que**, en comparant les tensions critiques à l'emplacement de référence et à l'emplacement où l'on mesure le champ de potentiel électrique local, on mesure le champ de potentiel électrique local en cet emplacement.

**3.** Procédé suivant la revendication 1 ou 2, **caractérisé en ce que** l'on effectue quantitativement la mesure du champ de potentiel électrique local au moyen d'un facteur de blindage, d'une efficacité de gating et d'un facteur de sensibilité.

**4.** Procédé suivant la revendication 1 ou 2, **caractérisé en ce que** l'on effectue un étalonnage du champ de potentiel électrique local mesuré au moyen d'un champ de potentiel électrique connu d'une structure de référence.

**5.** Procédé suivant l'une des revendications 1 à 4, **caractérisé en ce que** l'on extrait un élément de réduction électrique.

**6.** Procédé suivant l'une des revendications 1 à 5, **caractérisé**

**en ce que** la mesure du champ de potentiel électrique local s'effectue sans contact.

7. Procédé suivant l'une des revendications 1 à 6, **caractérisé**
**en ce que** la mesure du champ de potentiel électrique local s'effectue au dessus d'un échantillon isolant.

8. Procédé suivant l'une des revendications 1 à 7, **caractérisé**
**en ce que** l'on détermine la variation de charge du point (2) quantique par une variation de force, que l'on mesure, soit au moyen d'une mesure du décalage de fréquence dans le mode dynamique modulaire d'amplitude d'un microscope à force atomique, soit au moyen d'une variation de l'excursion en porte-à-faux dans le mode statique d'un microscope à force atomique, soit au moyen d'une mesure de la dissipation d'énergie dans le mode dynamique modulé en amplitude d'un microscope à force atomique.

9. Procédé suivant l'une des revendications 1 à 8, **caractérisé**
**en ce que** l'on mesure deux variations de charge différentes du point (2) quantique, dont les tensions critiques dépendent différemment de la distance entre la pointe (1) et la surface (3) de l'échantillon, afin de séparer ainsi le signal de topographie du signal du champ de potentiel électrique.

10. Procédé suivant l'une des revendications 1 à 9, **caractérisé**
**en ce que** l'on effectue une représentation en deux dimensions ou en trois dimensions du champ de potentiel électrique local, en répétant la mesure en des points différents du demi espace au-dessus de la surface de l'échantillon.

11. Procédé suivant l'une des revendications 1 à 10, **caractérisé**
**en ce que** l'on règle la tension appliquée à une valeur fixe proche de la tension critique où se produit la variation de charge du point (2) quantique, et on utilise le mode de fonctionnement standard d'un microscope à force atomique pour la représentation, tandis que l'on balaie la partie à examiner du demi espace au-dessus de l'échantillon.

12. Procédé suivant la revendication 11, **caractérisé**
**en ce qu'**il y a une relation univoque entre le signal du microscope à force atomique et la tension critique, et on interprète le signal du microscope à force atomique directement comme la variation de la tension critique.

13. Procédé suivant la revendication 11,

**caractérisé**
**en ce que** l'on interprète des lignes dans une représentation en deux dimensions, le long desquelles la variation du signal du microscope à force atomique est maximum, comme des lignes de potentiel électrique constant, c'est-à-dire des lignes d'équipotentiel du champ de potentiel électrique local.

14. Procédé suivant la revendication 11, **caractérisé**
**en ce que** l'on adapte la tension réglée, en correspondance à la variation de la tension critique, à la distance entre la pointe (1) et la surface (3) de l'échantillon et **en ce que** l'on interprète des surfaces dans une représentation en trois dimensions, sur lesquelles la variation du signal du microscope à force électronique est maximum, comme des surfaces de potentiel électrique constant, c'est-à-dire des surfaces d'équipotentiel du champ de potentiel électrique local.

15. Procédé suivant l'une des revendications 1 à 10, **caractérisé**
**en ce que** l'on maintient la tension appliquée, comme grandeur de réglage continuellement pendant le balayage du demi espace au-dessus de la surface d'échantillon, à la valeur critique à laquelle la variation de charge du point (2) quantique se produit.

Fig.1

Fig. 2

Fig. 3

Fig. 4

a)

b)

c)

Fig.5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- KR 100696870 B1
- US 20030021091 A1
- US 8726411 B1

**In der Beschreibung aufgeführte Nicht-Patentliteratur**

- Quantum transport throuh STM-lifted single PTCDA molecules. **FLORIAN PUMP.** Applied Physics A; Materials Science & Processing. Springer, 15. August 2008, vol. 93, 335-343
- Growth of single quantum dots on preprocessed structures: Signle photon emitters on a tip. **ZILLER V.** Applied Physics Letters. AIP Publishing LLC, 25. Februar 2005, vol. 86, 91911-091911
- Selective analysis of molecular states by functionalized scanning tunneling microscopy tips. **DENG Z.** Physical Review Letters. Americanm Physical Society, 21. April 2006, vol. 96, 156102, , 1-156102, 4
- Probe Force Microscopy. Springer Verlag, 2012
- **J. COLCHERO ; A. GIL ; A.M. BARÓ.** Resolution enhancement and improved data interpretation in electrostatic force microscopy. *Physical Rev. B,* 2001, vol. 64, 245403